# EUROPEAN PATENT APPLICATION

(11) **EP 4 765 796 A1**
(43) Date of publication of application: **24.06.2026**
(21) Application number: 25223683.1
(22) Date of filing: 16.12.2025
(51) Int. Cl.: H04N 1/00

(54) **IMAGE FORMING APPARATUS, IMAGE FORMING SYSTEM, INSPECTION METHOD, AND CARRIER MEDIUM**

(30) Priority: 20.12.2024 JP 2024225180
(71) Applicant: Ricoh Company, Ltd., Tokyo 143-8555 (JP)
(72) Inventor: Aoyagi, Kota, Japan, 143-8555 (JP)
(74) Representative: Marks & Clerk LLP

(57) **Abstract**

An image forming apparatus (100) includes a printer (101) to print printed matter based on print data, a printed image reading unit (307) to read, with a reading device, the printed matter to generate a first inspection target image, a first defect determination processing unit (355) to detect a defect on the printed matter based on a master image and the first inspection target image, the master image being generated from the print data of the printed matter, a second defect determination processing unit (357) to detect a position of the defect on a second inspection target image generated by the reading device without sheet passage, an exclusion region setting unit (356) to set, based on the position of the defect detected by the second defect determination processing unit (357), an inspection exclusion region where the first defect determination processing unit (355) does not detect the defect, and a display control unit (358) to cause a display to display at least one of the position of the defect on the second inspection target image and the inspection exclusion region.

## Description

### BACKGROUND

### Technical Field

The present disclosure relates to an image forming apparatus, an image forming system, an inspection method, and a carrier medium.

### Related Art

A printing system including a printing apparatus and an inspection apparatus is used. The printing apparatus forms an image on a sheet based on print data. The inspection apparatus reads the image with a reading device and compares the read image with a master image generated from the print data of the image. The inspection apparatus can evaluate the print quality in accordance with the result of the comparison. In order to appropriately evaluate the print quality, it is preferable that a defect such as dirt is not present in the reading device.

In the art, a technique for assisting a user to clean a reading device has been proposed (for example, see Japanese Patent No. 3853583). Japanese Patent No. 3853583 discloses a technique in which, when it is determined that dirt is present, a dirt position indication report is output. The dirt position indication report includes a mark indicating the position of the dirt in the main scanning direction in the reading device and a positioning mark.

However, the above-described technique has an issue that a user is frequently required to clean the reading device in order to eliminate a defect caused by the reading device. For example, even if the position of the defect does not affect print quality, the user is still required to clean the reading device.

### SUMMARY

The present disclosure described herein provides an image forming apparatus including a printer to print printed matter based on print data, a printed image reading unit to read, with a reading device, the printed matter to generate a first inspection target image, a first defect determination processing unit to detect a defect on the printed matter based on a master image and the first inspection target image, the master image being generated from the print data of the printed matter, a second defect determination processing unit to detect a position of the defect on a second inspection target image generated by the reading device without sheet passage, an exclusion region setting unit to set, based on the position of the defect detected by the second defect determination processing unit, an inspection exclusion region where the first defect determination processing unit does not detect the defect, and a display control unit to cause a display to display at least one of the position of the defect on the second inspection target image and the inspection exclusion region.

The present disclosure described herein provides an inspection method including reading, with a reading device, printed matter printed by a printing apparatus based on print data to generate a first inspection target image, detecting a defect on the printed matter based on a master image and the first inspection target image, the master image being generated from the print data of the printed matter, detecting a position of the defect on a second inspection target image generated by the reading device without sheet passage, setting, based on the position of the defect, an inspection exclusion region where the defect is not detected, and displaying, on a display, at least one of the position of the defect on the second inspection target image and the inspection exclusion region.

The present disclosure described herein provides a carrier medium carrying computer-readable code for controlling a computer system to carry out an inspection method including reading, with a reading device, printed matter printed by a printing apparatus based on print data to generate a first inspection target image, detecting a defect on the printed matter based on a master image and the first inspection target image, the master image being generated from the print data of the printed matter, detecting a position of the defect on a second inspection target image generated by the reading device without sheet passage, setting, based on the position of the defect, an inspection exclusion region where the defect is not detected, and displaying, on a display, at least one of the position of the defect on the second inspection target image and the inspection exclusion region.

According to one aspect of the present disclosure, a technique for reducing the frequency of cleaning for eliminating a defect caused by a reading device is provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating defects detected without sheet passage and defects detected with sheet passage;
FIG. 2 is a schematic diagram illustrating a configuration of a printing system;
FIG. 3 is a block diagram illustrating a configuration of a digital front end (DFE);
FIG. 4 is a block diagram illustrating a configuration of a printer;
FIG. 5 is a block diagram illustrating a configuration of an inspection apparatus;
FIG. 6 is a diagram illustrating an example of job management information;
FIG. 7 is a flowchart of the processing executed after the completion of a detection process without sheet passage;
FIG. 8 is a diagram illustrating an example of items used for determining a defect state;
FIG. 9 is a flowchart of the processing for registering an inspection exclusion region;
FIG. 10 is a diagram illustrating an example of a status display screen displayed by an inspection apparatus;
FIG. 11 is a diagram illustrating another example of a status display screen on which another type of error message is displayed;
FIG. 12 is a diagram illustrating a threshold value setting screen displayed by an inspection apparatus;
FIG. 13 is a diagram illustrating a detail setting screen displayed in a pop-up manner;
FIG. 14 is a diagram illustrating an example of an inspection exclusion region setting screen displayed by an inspection apparatus;
FIG. 15 is a diagram illustrating another example of an inspection exclusion region display screen displayed by an inspection apparatus;
FIG. 16 is a diagram illustrating one inspection exclusion region that has been enlarged;
FIG. 17 is a diagram illustrating an example of an inspection exclusion region display screen displayed according to the authority of a user who has logged in;
FIG. 18 is a diagram illustrating another example of an inspection exclusion region screen displayed according to the authority of a user who has logged in;
FIG. 19 is a diagram illustrating another display example of inspection exclusion region information;
FIG. 20 is a diagram illustrating still another display example of inspection exclusion region information displayed with a sheet position;
FIG. 21 is a diagram illustrating still another display example of inspection exclusion region information displayed with a scale indicating a dimension;
FIGs. 22A and 22B are diagrams each illustrating a display example in which an inspection target image generated through a detection process during actual printing and inspection exclusion region information are displayed on one screen; and
FIG. 23 is a diagram illustrating a display example of an inspection exclusion region that is set by a user as desired.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An image forming apparatus and an inspection method performed by the image forming apparatus according to one aspect of the present disclosure are described below with reference to the drawings.

### Overview of Process

A printing system according to one aspect of the present disclosure reads, with a reading device such as a sensor, printed matter actually created based on print data and generates an inspection target image (an example of a first inspection target image). Then, the printing system compares the inspection target image with a master image generated from the print data of the printed matter to determine whether the printed matter has been output with the expected quality. In the case where a degree of difference between the inspection target image and the master image is determined to be equal to or more than a certain value (that is, in the case where a defect is present), the difference is likely to be caused by either some kind of failure occurred in the printing process or a defect such as dirt present in the reading device. However, since a user does not know whether the detected defect is caused by the failure in the printing process or by the defect such as the dirt present in the reading device, the user has to clean the reading device in many cases. In such cases, the productivity of creating the printed matter decreases. In other words, the downtime of the apparatus increases. When a defect is detected, in order to present an appropriate maintenance method to the user, the printing system is required to determine whether the cause of the defect has occurred in reading or printing.

The printing system detects a defect in the reading device without actually reading the printed matter (referred to as "without sheet passage" in the following description), and sets a region surrounding the position where the defect is detected as an inspection exclusion region. Reading the printed matter actually is referred to as "with sheet passage" in the following description.
1. The printing system generates an inspection target image without sheet passage. The generated image is an example of a second inspection target image. The inspection target image generated without sheet passage is an image generated by the reading device reading a predetermined reference plane. In the case where a defect such as dirt is not present in the reading device, the inspection target image generated without sheet passage becomes a uniform image formed mostly of white pixels or black pixels throughout the entire image.
2. The printing system detects a defect on the inspection target image generated without sheet passage.
3. The printing system sets an inspection exclusion region that surrounds the position where the defect is detected on the inspection target image generated without sheet passage. Alternatively, the user may set the inspection exclusion region with reference to the detected defect or as desired. When a defect detected during inspection of printed matter with sheet passage is present within the inspection exclusion region, the printing system does not regard the defect as a target to be detected. In addition, the user can set the printing system to display the defect present within the inspection exclusion region as a "suspected defect caused by reading failure."

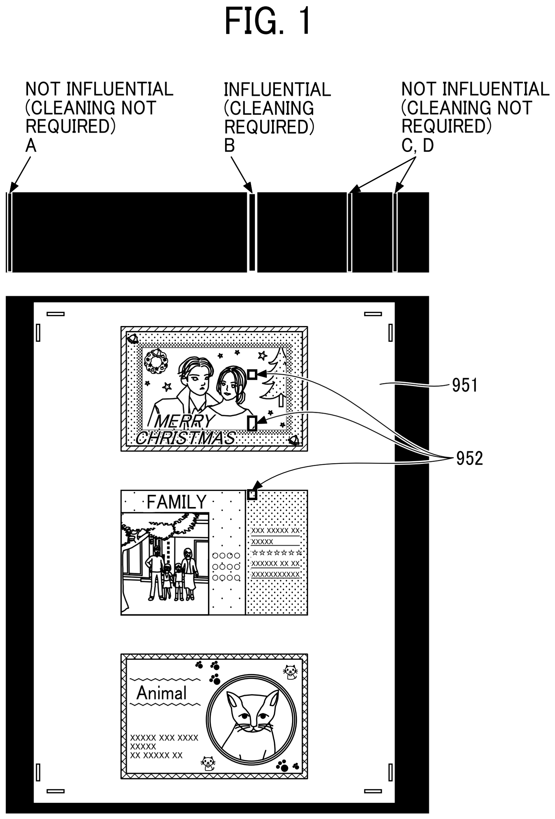

FIG. 1 is a diagram illustrating defects detected without sheet passage and defects detected with sheet passage. In FIG. 1, defects due to dirt adhesion are detected without sheet passage at four positions A to D (each of which is an inspection exclusion region to be described later). Since the defects at the positions A, C, and D are located in the blank space of the sheet or outside the print area of the sheet, none of the defects needs to be set to be included in the inspection exclusion region. (However, if any one of the defects is detected in an inspection with sheet passage, a checking work that is unnecessary is required. Accordingly, it is desirable to set each of the defects to be included in the inspection exclusion region.) The defect at the position B is located at a position overlapping with an image area on an inspection target image 951. If the inspection exclusion region is not set to include this defect, an erroneous detection will occur in the inspection with sheet passage. That is, a defect in the reading device is erroneously detected as a defect occurred in the printing process. In FIG. 1, three defects 952 are detected at vertically the same positions as the position B on the inspection target image 951.

As described above, when the dirt adhesion to the line sensor of the reading device increases, the number of inspection exclusion regions also increases. When the user desires to check the print quality of an image in an inspection exclusion region in the inspection with sheet passage, it is preferable to perform cleaning work to remove dirt that causes a reading streak, so that an inspection exclusion region is not required to be set for the position of the reading streak. For an area where the setting of an inspection exclusion region does not cause a problem, such as an area where strict inspection is not required, the operation may be continued without cleaning work.

In view of the above, in the present embodiment, the printing system notifies the user of a position of a defect or an inspection exclusion region. The position of the defect refers to a position where a defect is detected. The inspection exclusion region is a region set to include the position of the defect. By displaying the position of the defect or the inspection exclusion region, the user can more reliably determine whether cleaning work is required.

### Terminology

The term "inspection target image" refers to an image used for checking print quality and generated by a reading device performing optical reading. The inspection target image includes both an image generated by reading printed matter and an image generated by reading a reference plane without sheet passage.

The term "master image" refers to an image generated from print data that is source data of the printed matter and serving as a reference for the print quality.

The term "defect" refers to a portion or state that does not satisfy the standard of print quality. The defect includes both a defect that occurs on an inspection target image generated by reading the printed matter and a defect that occurs on an inspection target image generated by reading the reference plane without sheet passage. In the former case, the print quality is considered to have deteriorated. The deterioration of the print quality may be caused by a defect in the printing process or dirt in the reading device. In the latter case, the print quality is not affected even if a defect is present.

The term "a position of a defect" refers to a position where a defect is detected on the inspection target image. This position is a position on the inspection target image generated without sheet passage, and can be specified by the position in the main scanning direction and the position in the sub-scanning direction. Since the reading device performs reading using a line sensor, a defect that causes a streak parallel to the sub-scanning direction is likely to occur, and the position of the defect can be specified only by the position in the main scanning direction in many cases.

The term "inspection exclusion region" refers to a region in which, even when a defect is detected on the printed matter inspected during execution of a print job, the defect is treated as not being detected. The inspection exclusion region may be set to include the position of the defect or may be set manually by the user.

### Configuration of System

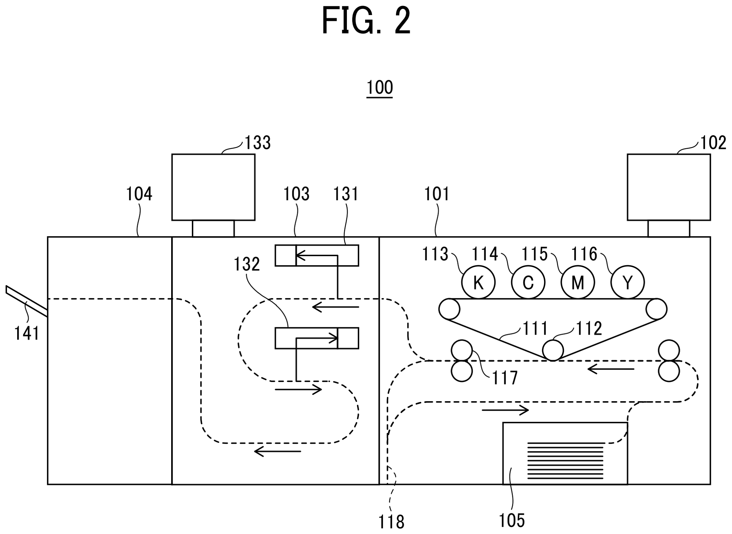

FIG. 2 is a schematic diagram illustrating a configuration of a printing system 100. The configuration of the printing system 100 illustrated in FIG. 2 is given by way of example, and any configuration that can detect a defect described in the present embodiment may be used.

The printing system 100 includes a printer 101, an inspection apparatus 103, and a stacker 104. The printing system 100 may be referred to as, for example, an image forming apparatus, an image forming system, or a multifunction peripheral/printer/product (MFP). All or two of the printer 101, the inspection apparatus 103, and the stacker 104 may be integrated into one apparatus. The printer 101 is an apparatus that receives data representing, for example, characters, images, or graphics, and prints an image on, for example, a sheet based on the data. The printer 101 may also be referred to as a printing apparatus.

On the top face of the printer 101, an operation panel 102 for the printer 101 is disposed. The operation panel 102 includes a display (touch panel) and a keyboard, and displays an operation screen. The operation panel 102 displays an operation screen for operating the printing system 100 and receives various kinds of operations from the user.

The printer 101 receives a print job that includes a raster image processing (RIP) image from an external device such as a digital front end (DFE) to be described later or a personal computer (PC), or receives an instruction to execute a print job stored in the printer 101. In the present embodiment, the RIP image is assumed to be formed in 8 bits for each of cyan, magenta, yellow, and black (CMYK) colors, as an image of 600 dots per inch (dpi).

The printer 101, in accordance with the contents of a print job instructed to be executed, acquires a sheet from a sheet feeder 105 and conveys the sheet along a path indicated by a dotted line in FIG. 2. The printer 101 forms an image on the sheet using drums 113, 114, 115, and 116. The printer 101 superimposes toner images of black (K), cyan (C), magenta (M), and yellow (Y) colors, which are respectively formed on the drums 113, 114, 115, and 116, one above the other on a belt 111 to form a full-color toner image, transfers the full-color toner image onto the sheet conveyed to a roller 112, and fixes the full-color toner image on the sheet by a roller pair 117 with heat and pressure. In the case of single-sided printing, the sheet is ejected to the inspection apparatus 103 without any further operation. In the case of double-sided printing, the sheet is reversed at a reverse path 118 and conveyed to the roller 112. Then, another full-color toner image formed by the drums 113, 114, 115, and 116 is also transferred and fixed onto the back side of the sheet and the sheet is ejected to the inspection apparatus 103.

The inspection apparatus 103 is an apparatus for inspecting the printed matter output by the printer 101 to check the print quality. The inspection apparatus 103 includes an operation panel 133 for the inspection apparatus 103. The functions of the operation panel 133 may be the same as those of the operation panel 102. The inspection apparatus 103 may not include the operation panel 133, and the operation panel 102 for the printer main body may also serve as the operation panel 133. Alternatively, the operation panel 133 for the inspection apparatus 103 may be a PC connected via, for example, a local area network (LAN). In this case, the PC displays the inspection result using, for example, a web browser or a dedicated application.

The inspection apparatus 103 separately reads the image on each side of the sheet ejected from the printer 101 using reading devices 131 and 132, conveys the sheet along the path in a direction indicated by arrows, and ejects the sheet to the stacker 104. Each of the reading devices 131 and 132 is an example of reading means, which may be implemented by a sensor. In the present embodiment, the image read by each of the reading devices 131 and 132 is assumed to be formed in 8 bits for each of red, green, and blue (RGB) colors as an image of 200 dpi.

The stacker 104 stacks the sheet ejected from the inspection apparatus 103 on a tray 141.

### Digital Front End (DFE)

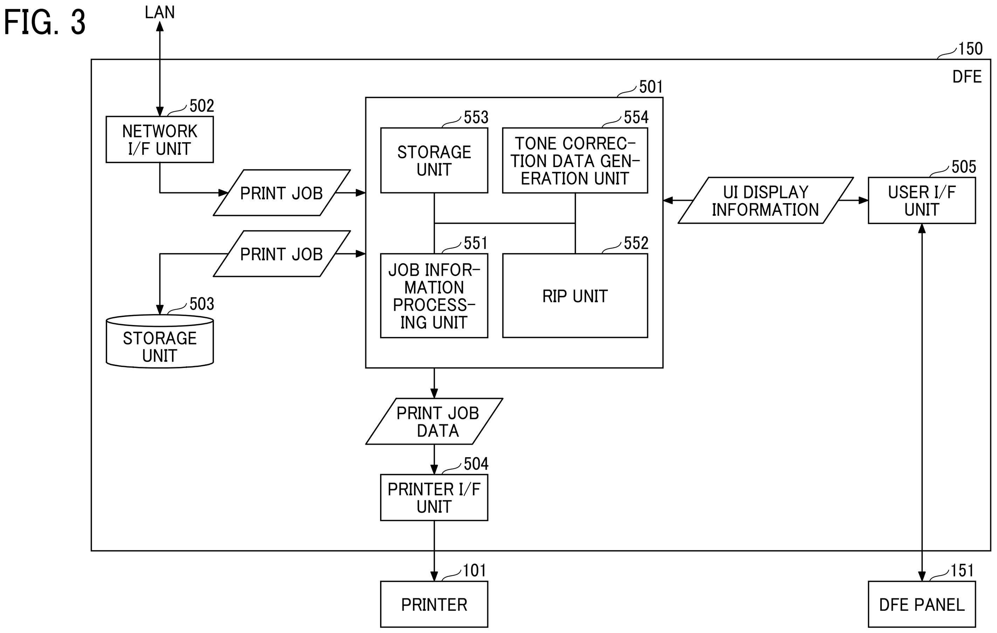

With reference to FIG. 3, a digital front end (DFE) 150 is described below. The digital front end (DFE) is a general term representing devices that process data to be input to a printer. The DFE 150 generates RIP data to be printed by the printer 101 from print data such as POSTSCRIPT data.

FIG. 3 is a block diagram illustrating a configuration of the DFE 150. To the DFE 150, the printer 101 in FIG. 2 and a DFE panel 151 for displaying a user interface are connected. The DFE panel 151 is a user interface that includes a display (touch panel) and a keyboard.

The DFE 150 includes a system control unit 501, a network interface (I/F) unit 502, a user I/F unit 505, a storage unit 503, and a printer I/F unit 504. In one example, these units provide functions implemented by circuitry such as a CPU of the DFE 150 executing instructions included in one or more programs installed in the DFE 150.

The user I/F unit 505 of the DFE 150, which may be implemented by an interface circuit, generates a screen to be displayed on the DFE panel 151 using user interface (UI) display information, and causes the DFE panel 151 to display the screen. The UI display information includes multiple display components that form the screen and the arrangement thereof.

The network I/F unit 502 of the DFE 150, which may be implemented by an interface circuit, is a communication interface for connecting the DFE 150 to the LAN. The network I/F unit 502 receives a print job through the LAN and transmits the print job to the system control unit 501.

Alternatively, a print job may be stored in the storage unit 503 that is implemented by any desired memory, and the system control unit 501 acquires the print job from the storage unit 503. In other words, the system control unit 501 may receive a print job via the network I/F unit 502 or may acquire a print job from the storage unit 503.

The DFE 150 includes the system control unit 501. The system control unit 501 controls the overall operation of the DFE 150. The system control unit 501 includes a job information processing unit 551, a RIP unit 552, a storage unit 553, and a tone correction data generation unit 554.

The job information processing unit 551 manages, as job management information relating to the print job, for example, the status of the print job, the input of the print job to the printer 101, and the progress of the print job (obtained from the printer 101) in the storage unit 553. The job information processing unit 551 inputs print job data relating to the print job to the printer 101 together with the job management information and the data of the RIP image. In the storage unit 553, the print job data relating to the print job (e.g., a job identification (ID), a file name, a job registration date and time, a job owner) is stored.

The tone correction data generation unit 554 adjusts the print data so that an image representing the print data is printed with the same tone, density, and color as those of the original document. For example, the tone correction data generation unit 554 strengthens or weakens the tone, increases or decreases the density, or increases or reduces warm colors or blue colors.

The RIP unit 552 generates RIP data to be printed by the printer 101 from print data such as POSTSCRIPT data. The RIP data is dot data (indicating whether to print a dot) of the toner of each color.

The printer I/F unit 504 of the DFE 150, which may be implemented by an interface circuit, is an interface for communicating with the printer 101. The printer I/F unit 504 transmits the print job data determined to be input by the system control unit 501 to the printer 101.

### Printer

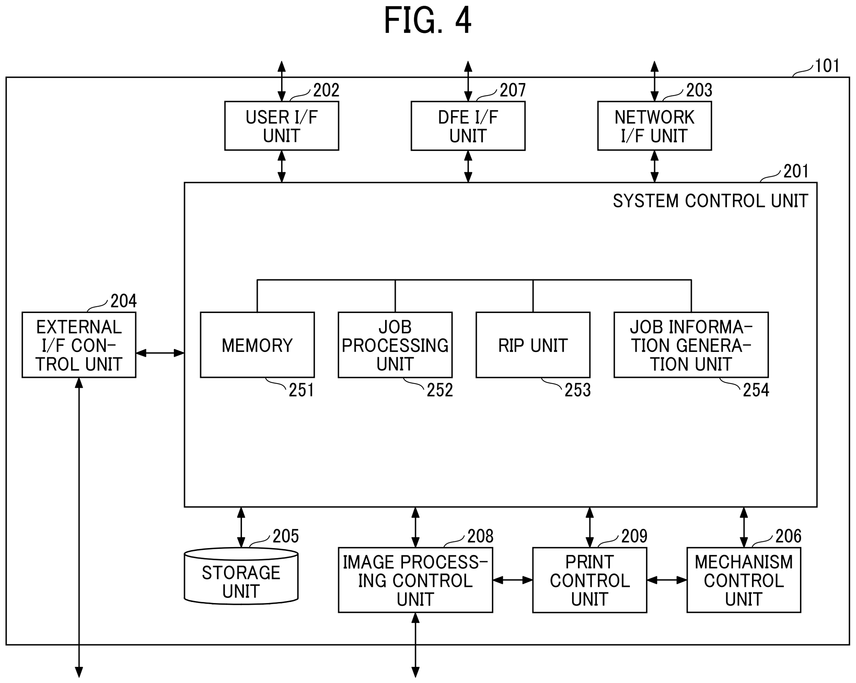

FIG. 4 is a block diagram illustrating a configuration of the printer 101. The printer 101 includes a system control unit 201, a user I/F unit 202, a DFE I/F unit 207, a network I/F unit 203, an external I/F control unit 204, a storage unit 205, an image processing control unit 208, a print control unit 209, and a mechanism control unit 206. In one example, these units provide functions implemented by circuitry such as a CPU of the printer 101 executing instructions included in one or more programs installed in the printer 101.

The system control unit 201 controls the overall operation of the printer 101. To the system control unit 201, the user I/F unit 202, the DFE I/F unit 207, the network I/F unit 203, the external I/F control unit 204, the storage unit 205, the image processing control unit 208, the print control unit 209, and the mechanism control unit 206 are connected.

The user I/F unit 202, which may be implemented by an interface circuit, is an interface for connecting the system control unit 201 and the operation panel 102 illustrated in FIG. 2 to each other.

The DFE I/F unit 207, which may be implemented by an interface circuit, is an interface for enabling communication (for example, reception of the print job data) between the system control unit 201 and the DFE 150 illustrated in FIG. 3.

The network I/F unit 203, which may be implemented by an interface circuit, is an interface for connecting the system control unit 201 to a network such as the LAN and allowing the printer 101 to communicate with devices on the network.

The external I/F control unit 204, which may be implemented by an interface circuit, is an interface through which the printer 101 communicates with other devices such as the inspection apparatus 103 and the stacker 104.

The storage unit 205 is a storage device implemented by, for example, a hard disk drive (HDD) or a solid-state drive (SSD). In the storage unit 205, for example, the print job data is stored.

The mechanism control unit 206 controls the operation of each mechanism in the printer 101, such as sheet conveyance, an image transfer process, and control of double-sided or single-sided printing in the printer 101.

The print control unit 209 instructs the mechanism control unit 206 to control the timing of each mechanism, and also controls the overall operation of image formation on the sheet. The image processing control unit 208 processes the image transferred by the mechanism control unit 206.

The system control unit 201 includes a memory 251, a job processing unit 252, a RIP unit 253, and a job information generation unit 254.

The memory 251 is a memory used as a work area for the system control unit 201.

In response to receiving the print job data from the DFE 150, the job information generation unit 254 generates, for example, a job ID used in the printer, a reception date and time, and progress, and stores the generated information in the storage unit 205.

The RIP unit 253 executes the raster image processing on the print data in the case where the raster image processing has not been executed on the print job.

The job processing unit 252 inquires of the print control unit 209 about the availability for a print job, and determines a print job to be executed from among the print job data stored in the storage unit 205, for example, according to priority.

### Inspection Apparatus

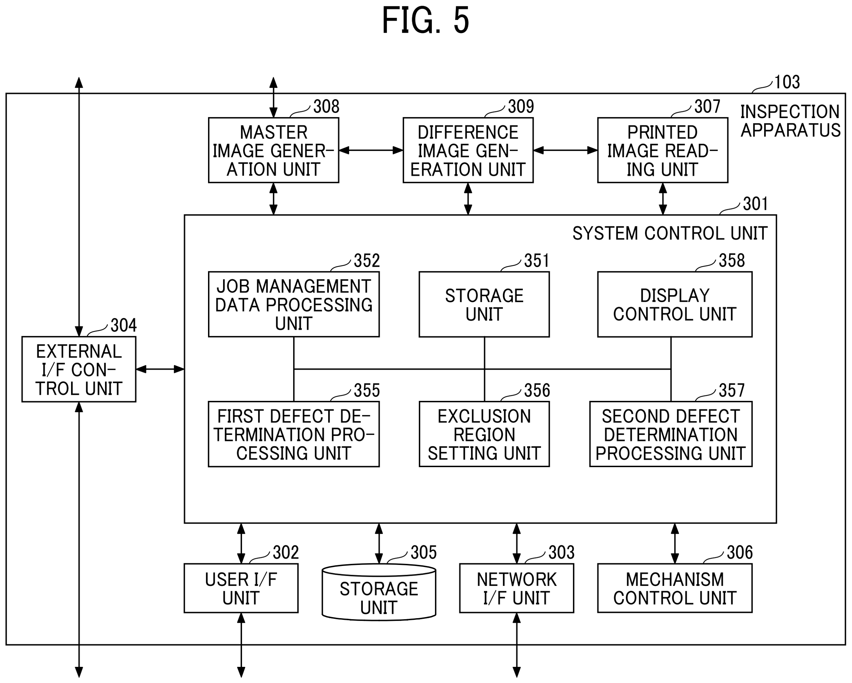

FIG. 5 is a block diagram illustrating a configuration of the inspection apparatus 103. The inspection apparatus 103 includes a system control unit 301, a master image generation unit 308, a difference image generation unit 309, a printed image reading unit 307, an external I/F control unit 304, a user I/F unit 302, a storage unit 305, a network I/F unit 303, and a mechanism control unit 306. In one example, these units provide functions implemented by circuitry such as a CPU of the inspection apparatus 103 executing instructions included in one or more programs installed in the inspection apparatus 103.

The system control unit 301 controls the overall operation of the inspection apparatus 103. To the system control unit 301, the master image generation unit 308, the difference image generation unit 309, the printed image reading unit 307, the external I/F control unit 304, the user I/F unit 302, the storage unit 305, the network I/F unit 303, and the mechanism control unit 306 are connected.

The user I/F unit 302, which may be implemented by an interface circuit, is an interface for connecting the system control unit 301 and the operation panel 133 illustrated in FIG. 2 to each other. The user I/F unit 302 causes the operation panel 133 to display the information of the system control unit 301. In the case where a position of a defect detected in the detection process during actual printing overlaps with an inspection exclusion region, the user I/F unit 302 causes the defect to be displayed as a suspected defect caused by reading failure in a manner different from the manner for causing an ordinary defect to be displayed.

The network I/F unit 303, which may be implemented by an interface circuit, is an interface for connecting the system control unit 301 to a network such as the LAN.

The external I/F control unit 304, which may be implemented by an interface circuit, is an interface for connection with other devices such as the printer 101 and the stacker 104.

The mechanism control unit 306 controls the operation of each mechanism of the inspection apparatus 103, such as sheet conveyance, the reading of both sides or one side of a sheet, and the ejection of a sheet.

The storage unit 305 is a storage device implemented by, for example, an HDD or an SSD. In the storage unit 305, for example, an inspection target image, a difference image, a master image, and an inspection result are stored. In the storage unit 305, information on the inspection exclusion region is also stored.

The printed image reading unit 307 reads both sides of the sheet conveyed from the printer 101 with the reading devices 131 and 132, and outputs an inspection target image. The printed image reading unit 307 generates an inspection target image in both the detection process during actual printing and the detection process without sheet passage, which will be described later. The detection process during actual printing is a process in which printed matter is inspected during the execution of a print job. The detection process without sheet passage is a process in which a defect in the reading device 131 or 132 is detected before the execution of a print job starts.

In the detection process during actual printing, the master image generation unit 308 generates a master image from the RIP image transmitted by the DFE 150. This RIP image is generated from the print data to be formed on the sheet as an image.

In the detection process during actual printing, the difference image generation unit 309 generates a difference image between the master image and the inspection target image. The difference image is an image that represents the difference in pixel value for each pixel between the master image and the inspection target image. Since the RIP image is generated from the print data to be formed on the sheet as an image and the inspection target image is generated by reading the printed matter, the pixel value of the difference image should be smaller than a threshold value under normal conditions.

The system control unit 301 includes a storage unit 351, a job management data processing unit 352, a first defect determination processing unit 355, an exclusion region setting unit 356, a second defect determination processing unit 357, and a display control unit 358.

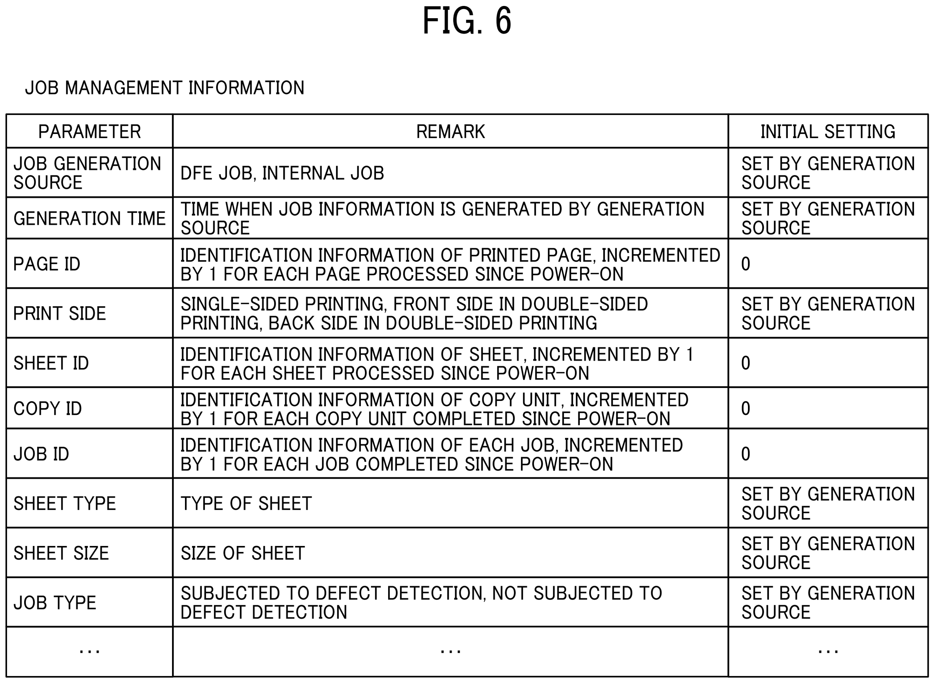

In the detection process during actual printing, the system control unit 301 receives print management information (included in the job management information) via the external I/F control unit 304, and causes the print management information to be stored in the storage unit 351 of the system control unit 301. The job management data processing unit 352 extracts post-processing device information from the job management information illustrated in FIG. 6 and transmits, via the external I/F control unit 304, the post-processing device information to the stacker 104 that is a post-processing device operating at a stage subsequent to the operation of the inspection apparatus 103. The job management data processing unit 352 reads out the print management information from the storage unit 351. The job management data processing unit 352 transfers the print management information to the master image generation unit 308, the difference image generation unit 309, the printed image reading unit 307, and the mechanism control unit 306 so that these functional units process the print job. The print management information to be transferred is the job management information illustrated in FIG. 6 from which the post-processing device information is excluded.

In the detection process during actual printing, the system control unit 301 causes the storage unit 351 to store the inspection target image and the difference image, and notifies the first defect determination processing unit 355 of the storage. The first defect determination processing unit 355 performs defect determination on the difference image according to a threshold value determined in advance for the defect determination. The first defect determination processing unit 355 performs, for example, edge detection on the difference image to detect an edge having an intensity higher than the threshold value for the defect determination. The edge to be detected may be of any shape, such as a dot or a line.

In the detection process without sheet passage, the system control unit 301 causes the storage unit 351 to store the inspection target image and notifies the second defect determination processing unit 357 of the storage. The second defect determination processing unit 357 performs defect determination on the inspection target image according to a threshold value determined in advance for the defect determination. In the case where a defect such as dirt is not present in the reading device, the inspection target image generated through the detection process without sheet passage becomes a uniform image formed mostly of white pixels or black pixels throughout the entire image. When a difference image from the master image is generated, the master image is an image formed of white pixels or black pixels throughout the entire image. However, the master image may not be required. The second defect determination processing unit 357 performs edge detection on the inspection target image to detect an edge having an intensity higher than the threshold value for the defect determination. The edge to be detected may be of any shape, such as a dot or a line.

The exclusion region setting unit 356 excludes the position of the defect detected by the second defect determination processing unit 357 or the position of the defect set by the user from the region where the first defect determination processing unit 355 detects a defect. In other words, the exclusion region setting unit 356 sets an inspection exclusion region where the first defect determination processing unit 355 does not detect a defect, so as to include the position of the defect detected by the second defect determination processing unit 357.

The display control unit 358 causes, via the user I/F unit 302, at least one of the inspection exclusion region set by the exclusion region setting unit 356 and the position of the defect based on which the inspection exclusion region is set to be displayed on, for example, the operation panel 102 or 133. Alternatively, the network I/F unit 303 may notify the user of a uniform resource locator (URL) that indicates a location where the inspection exclusion region or the position of the defect is displayed, for example, by e-mail.

FIG. 6 is a diagram illustrating an example of the job management information. This job management information is used for the case where the printer 101 executes an ordinary printing process (i.e., the detection process during actual printing). In the printing process, print data is generated for an individual page by at least one of the DFE 150 and the printer 101. The print job is processed based on the job management information.

The job management information includes, as data items, a parameter, a remark, and an initial setting. The parameter is the name of an item. The remark is the explanation of the parameter. The initial setting indicates the setting when the system control unit 201 of the printer 101 receives the parameter.

A job generation source is information indicating a source that outputs a job. In the job generation source, information indicating whether the job is a print job input from the DFE 150 or internal data of the printer 101 is included.

A generation time is information indicating the date and time when the job generation source has generated the job.

A page ID is the identification number of a printed page. The page ID is incremented by one for each page processed since the power-on. A numerical value is set to the page ID when printing is executed.

A print side identifies whether the print job is single-sided printing or double-sided printing. In the case where the print job is identified to be double-sided printing, the print side identifies whether a side on which an image is to be printed is the front side (double-sided front) or the back side (double-sided back) of the sheet.

A sheet ID is identification information indicating a sheet used for printing. In the case of double-sided printing, the page IDs of pages printed on the same sheet are associated with the same sheet ID. The sheet ID is incremented by one for each sheet processed since the power-on. A numerical value is set to the sheet ID when printing is executed.

A copy ID is identification information for each copy. The copy ID is incremented by one each time the output of one copy is completed since the power-on. A numerical value is set to the copy ID when printing is executed.

A job ID is identification information for each job. The job ID is incremented by one each time the output of one job is completed since the power-on. A numeric value is set to the job ID when printing is executed.

A sheet type is information indicating a type of sheet used for printing. A sheet size is information indicating the size of a sheet. A job type indicates whether the print job is a print job subjected to defect detection or a print job not subjected to defect detection, or whether the print job involves an insertion sheet used for identifying defect detection.

### Defect Detection Process

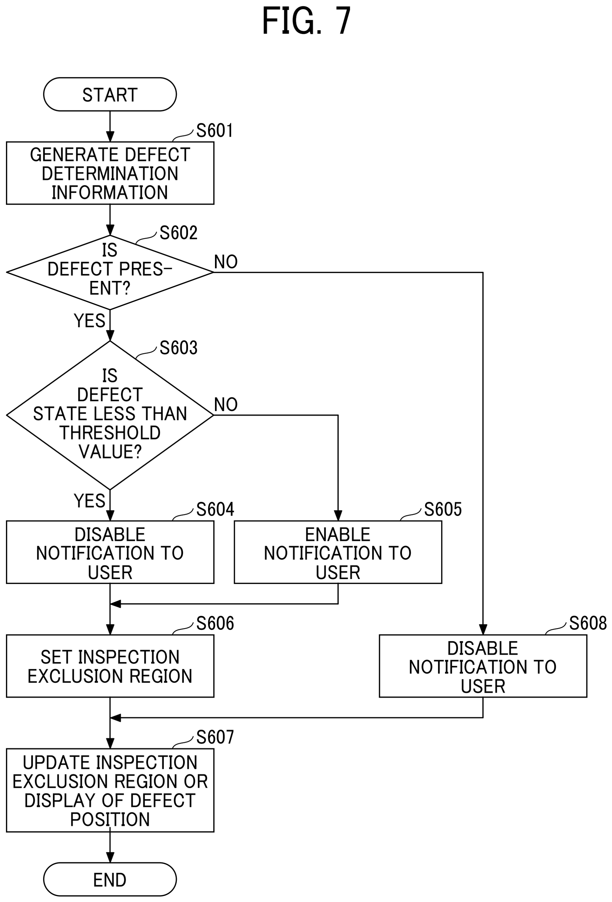

FIG. 7 is a flowchart of the processing executed after the completion of the detection process without sheet passage. The processing of FIG. 7 is executed after the detection process without sheet passage is performed and the second defect determination processing unit 357 performs a defect detection process on the inspection target image. In the detection process without sheet passage, the printed image reading unit 307 generates an inspection target image in a state where no sheet is conveyed. In the case where a defect is present on the inspection target image, it is highly probable that the defect (e.g., dirt) is caused by the reading device 131 or 132.

In step S601, the second defect determination processing unit 357 generates defect determination information. The second defect determination processing unit 357 performs defect determination on the inspection target image based on a threshold value determined in advance for the defect determination, and generates defect determination information including the following information.
- The number of defects detected when the detection process without sheet passage is performed.
- The positions of the defects when the detection process without sheet passage is performed.

In step S602, the second defect determination processing unit 357 determines whether a defect is present based on the defect determination information, and detects a defect state when a defect is determined to be present.

In the case where no defect is determined to be present (NO in S602), the display control unit 358 disables the setting of the notification to the user in step S608. The disabling the setting of the notification means that no notification prompting cleaning is given.

In the case where a defect is determined to be present (YES in S602), the second defect determination processing unit 357 determines whether the defect state of the detected defect is less than the threshold value in step S603. The defect state is determined based on, for example, the following items.
(i) For example, the defect state is determined based on the number of defects. The user is allowed to set the threshold value to which the number of defects is compared. For example, a notification is given when the number of defects is 10 or more.
(ii) In another example, the defect state is determined by a combination of multiple conditions. For example, a notification is given when the number of defects having a region with the width of 3 pixels or more is 10 or more. In this case, the user is allowed to set the threshold values for the width of the region of a defect and the number of defects.

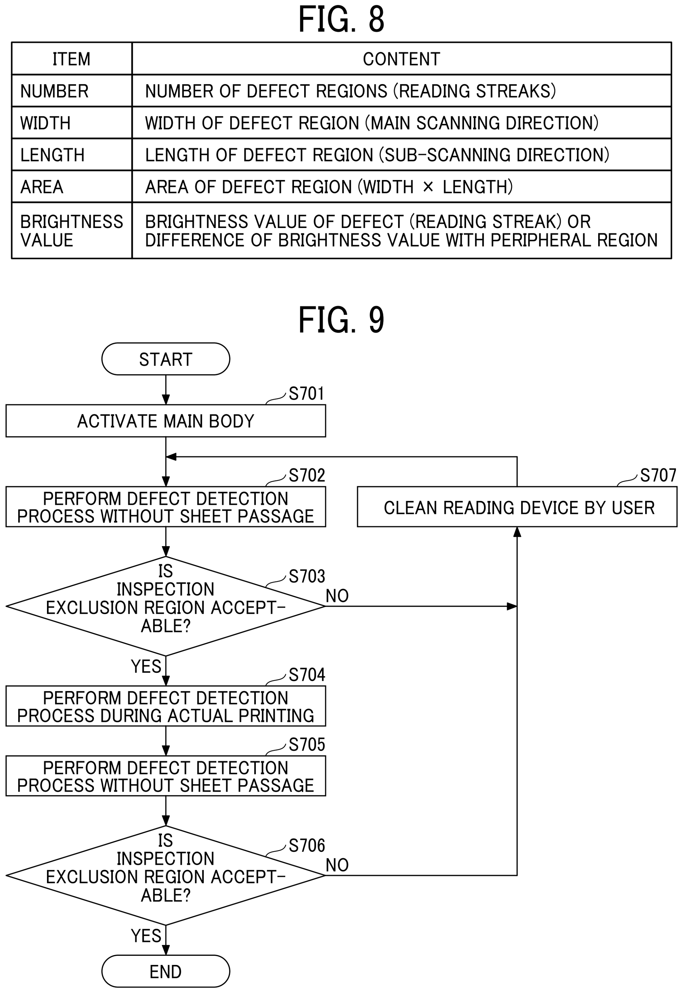

In addition, as illustrated in FIG. 8, the defect state may be determined based on several items. FIG. 8 is a diagram illustrating an example of items used for determining a defect state. In addition to the width of the region of a defect and the number of defects described above, a length, an area, and a brightness value of a defect may be used for determining a defect state.
- The number of defects is the number of defect regions. A defect region is typically a streak, but may have another shape.
- The width of a defect is the width of the defect region. The width may be, for example, the length of the circumscribed rectangle of the defect region in the main scanning direction.
- The length of a defect is the length of the defect region. The length may be, for example, the length of the circumscribed rectangle of the defect region in the sub-scanning direction.
- The area of the defect is the area (width × length) of the defect region.
- The brightness value of a defect refers to a pixel value (RGB values) of the defect, and may be, for example, an average, median, or maximum value of the RGB values. Alternatively, the brightness value may be a difference between the pixel value of the defect region and the pixel value of the non-defective region.

In the case where the result of the determination in step S603 is Yes (YES in S603), the display control unit 358 disables the setting of the notification to the user in step S604. The disabled setting of the notification means that no notification prompting cleaning is given. In the case where the result of the determination in step S603 is No (NO in S603), the display control unit 358 enables the setting of the notification to the user in step S605. The enabled setting of the notification means that a notification prompting cleaning is given.

In step S605 in which the setting of the notification to the user is enabled, a notification prompting cleaning is given based on the threshold value set by the user. Accordingly, a notification is given according to a level of the risk of missing a defect tolerable to the user and an increase in the risk of missing a defect is prevented. When the display control unit 358 notifies the user to prompt cleaning and the user performs cleaning work, the processing (the setting of the inspection exclusion region) of FIG. 7 may be executed again. Depending on the type of the printer 101, in a certain type of printer, the "detection process without sheet passage" is performed even when the door of the printer is closed after cleaning. In other words, since the operations are performed in the order of opening the door, cleaning by the user, and closing the door, the processing of FIG. 7 is necessarily executed in such a type of the printer 101 after the cleaning. Accordingly, since the inspection exclusion region is set after the cleaning, an increase in the risk of missing a defect caused by an increase in dirt adhesion or an increase in the number of inspection exclusion regions due to the cleaning is prevented.

Through steps S603 to S605, the frequency of the checking work and cleaning work performed by the user is reduced, and an increase in the risk of missing a defect is prevented. In other words, the region where a defect is detected is set as the inspection exclusion region. When a noticeable defect caused by the reading device 131 or 132 is determined to be present in the inspection exclusion region according to the result of the determination in S603, the user is prompted to perform cleaning work in advance. Accordingly, an increase in the number of inspection exclusion regions is prevented, and an increase in the risk of missing a defect when a defect not caused by the reading device 131 or 132 is present in the inspection exclusion region is prevented. Further, since the defect in the inspection exclusion region is excluded from the inspection, the frequency of the checking work to check whether the defect is caused by the reading device is reduced and the frequency of the cleaning work is also reduced.

In step S606, in the case where a preset manual adjusting function of the inspection exclusion region is disabled, the exclusion region setting unit 356 sets a region surrounding the position where the defect is detected as the inspection exclusion region. By excluding the position of the defect detected in the detection process without sheet passage from the region where the defect is detected when the detection process during actual printing is performed, cleaning for preventing the detection of the defect caused by the reading device 131 or 132 is obviated or the frequency of cleaning is reduced. Also, erroneous detection to detect a reading streak (a defect caused by the reading device 131 or 132) as a defect is prevented.

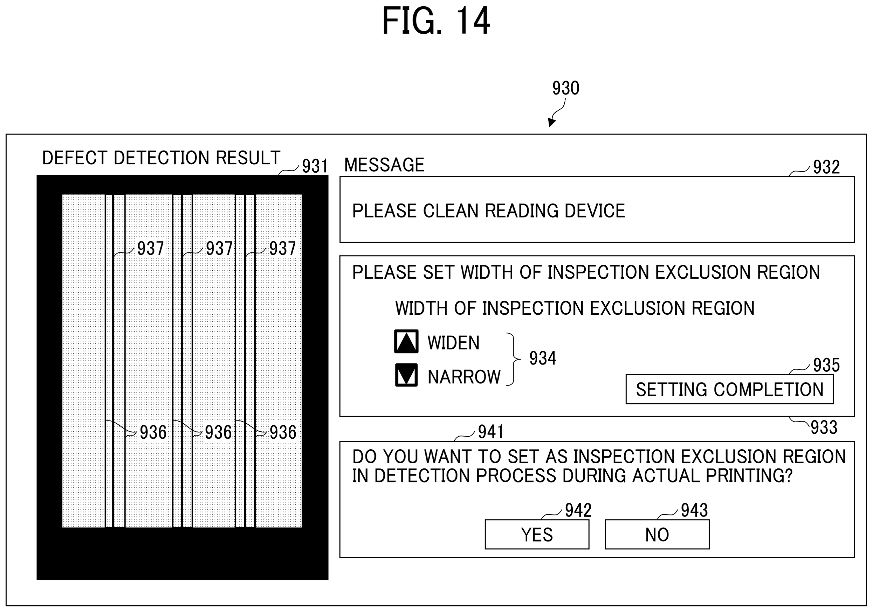

In the case where the preset manual adjusting function of the inspection exclusion region is enabled, an inspection exclusion region setting screen is displayed (see FIG. 14). The display control unit 358 causes the inspection exclusion region set to include the detected defect to be displayed. The user performs operations on the inspection exclusion region setting screen to adjust the inspection exclusion region. In addition, the user is allowed to select whether to cause the defect in the inspection exclusion region to be displayed as a suspected defect caused by reading failure. The exclusion region setting unit 356 sets the inspection exclusion region designated by the user as an inspection exclusion region. The position where the defect occurs may vary to some extent. For this reason, by the user designating the inspection exclusion region with a margin in area, the position where the defect occurs is prevented from not being included in the inspection exclusion region.

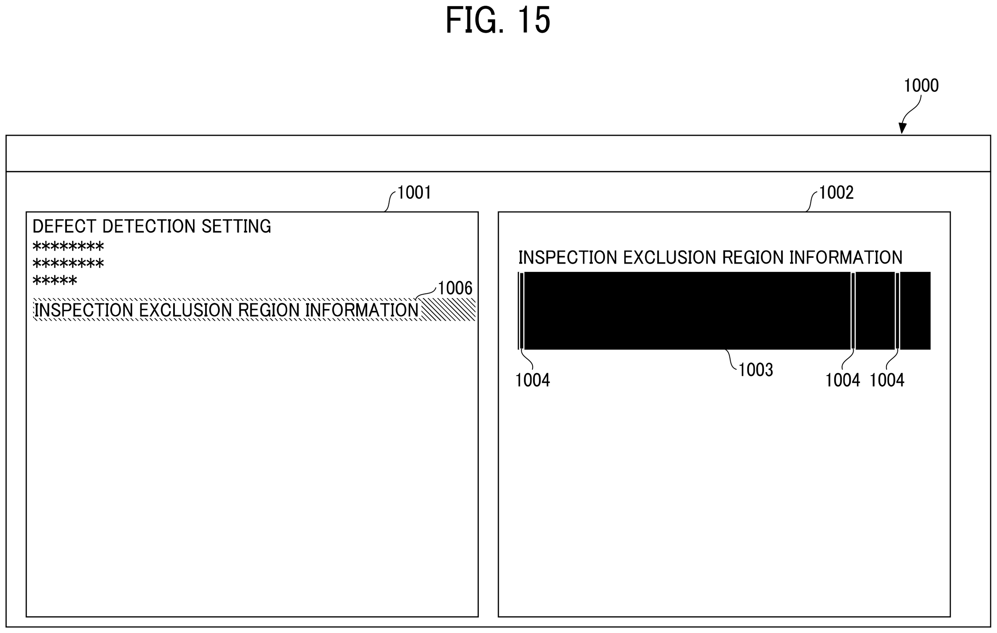

In step S607, the display control unit 358 updates the display of the position of the defect or the inspection exclusion region. Examples of the display of the position of the defect and the inspection exclusion region will be described with reference to, for example, FIG. 15. The user is allowed to perform operations to display the inspection exclusion region that is currently set and the position of the defect.

The order of step S606 and step S607 may be reversed. In this case, the position of the defect and the inspection exclusion region are automatically displayed in a pop-up manner, and when the user performs an operation of screen transition, the display control unit 358 performs screen transition to transition to the inspection exclusion region setting screen of FIG. 14. When the user performs an operation of saving on the inspection exclusion region setting screen, the inspection exclusion region is set.

FIG. 9 is a flowchart of the processing for performing the detection process without sheet passage and the setting of the inspection exclusion region. The processing in FIG. 9 is executed, for example, when the power supply of the inspection apparatus 103 is turned on and the main body is activated in step S701. In addition, the processing in FIG. 9 may be executed in response to an operation performed by the user, recovery from an energy saving mode, or closing of a predetermined cover of the printer 101.

When the main body is activated, the system control unit 301 of the inspection apparatus 103 automatically performs the detection process without sheet passage in step S702. In other words, before actual printing starts using an actual print job, the system control unit 301 performs the detection process without sheet passage to detect a defect in the reading devices 131 and 132.

After the detection process without sheet passage is performed, the processing in FIG. 7 is executed. The system control unit 301 resets the inspection exclusion region registered in step S606 before the inspection exclusion region setting screen of step S606 is displayed.

In step S703, the display control unit 358 receives an input of determination from the user whether to accept the setting of the inspection exclusion region. In other words, the display control unit 358 receives an input of determination from the user whether the inspection exclusion region is acceptable. The user performs an operation to display the inspection exclusion region information illustrated in FIG. 15 and determines whether the inspection exclusion region is acceptable. By displaying the inspection exclusion region information in response to the operation performed by the user, the printing system can prevent an input screen from being displayed each time the detection process without sheet passage is performed and can avoid requiring the user to input whether the inspection exclusion region is acceptable. However, when the inspection exclusion region information to be set has increased since the detection process without sheet passage is last performed, the input screen may be automatically displayed. The exclusion region setting unit 356 compares the area of the inspection exclusion region stored in the storage unit 351 with the area of the inspection exclusion region to be set by the exclusion region setting unit 356. When the latter is larger, the display control unit 358 causes a message indicating "Do you want to set this as the inspection exclusion region in the detection process during actual printing?" to be displayed on the inspection exclusion region setting screen in step S606. In response to an input from the user that the inspection exclusion region is acceptable, the exclusion region setting unit 356 registers the inspection exclusion region displayed or set in step S606.

The user may be allowed to set whether to enable or disable the setting of the notification according to the area of the inspection exclusion region to be set by the exclusion region setting unit 356, or whether the input screen needs to be displayed each time the detection process without sheet passage is performed.

In the case where the result of the determination in step S703 is Yes (YES in S703), the process proceeds to step S704. In the case where the result of the determination in step S703 is No (NO in S703), the process proceeds to step S707.

Since the detection process without sheet passage is completed, the system control unit 301 performs the detection process during actual printing in step S704. In the detection process during actual printing, even when a defect is detected in the registered inspection exclusion region, the first defect determination processing unit 355 does not treat the defect as a defect (i.e., deterioration in print quality). In the detection process during actual printing, since a defect caused by the reading device 131 or 132 is excluded from the detection targets, cleaning for preventing the detection of the defect is obviated or the frequency of cleaning is reduced.

In the present embodiment, even when a defect is detected in the inspection exclusion region, the defect is not treated as a defect. In addition, when the inspection exclusion region stored in the storage unit 351 by the exclusion region setting unit 356 overlaps with the position of the defect detected by the second defect determination processing unit 357, the first defect determination processing unit 355 may determine the defect to be a suspected defect caused by reading failure. On the inspection target image, a portion of the suspected defect caused by reading failure is displayed with emphasis. In this way, the user can check whether the defect is caused by the reading device 131 or 132.

In step S705, since the actual printing is completed, the system control unit 301 of the inspection apparatus 103 performs the detection process without sheet passage again. The system control unit 301 of the inspection apparatus 103 performs the detection process without sheet passage when the print job has been completed.

After the detection process without sheet passage is performed, the processing in FIG. 7 is executed in the same manner as after the process of step S702. The system control unit 301 resets the inspection exclusion region registered in step S606 before the inspection exclusion region setting screen of step S606 is displayed to the user.

In step S706, the display control unit 358 receives, on the inspection exclusion region setting screen displayed in step S606, an input of determination from the user whether to accept the setting of the inspection exclusion region. In other words, the display control unit 358 receives an input of determination from the user whether the inspection exclusion region is acceptable. The input method performed by the user may be the same as that in step S703. In the case where the input from the user indicates that the inspection exclusion region is acceptable, the exclusion region setting unit 356 registers the inspection exclusion region displayed or set in step S606.

In the case where the result of the determination in step S706 is Yes (YES in S706), the process ends. In the case where the result of the determination in step S706 is No (NO in S706), the process proceeds to step S707.

In step S707, the user opens the cover and cleans the reading devices 131 and 132. In other words, since an unacceptable number or size of defects (inspection exclusion regions) has occurred, the user cleans the reading devices 131 and132. When the cleaning is completed, in step S702, the detection process without sheet passage is performed in response to closing of the cover (e.g., notification from a sensor that detects a change from the open state to the closed state of the cover).

### Examples of Notification of Defect Detection to User

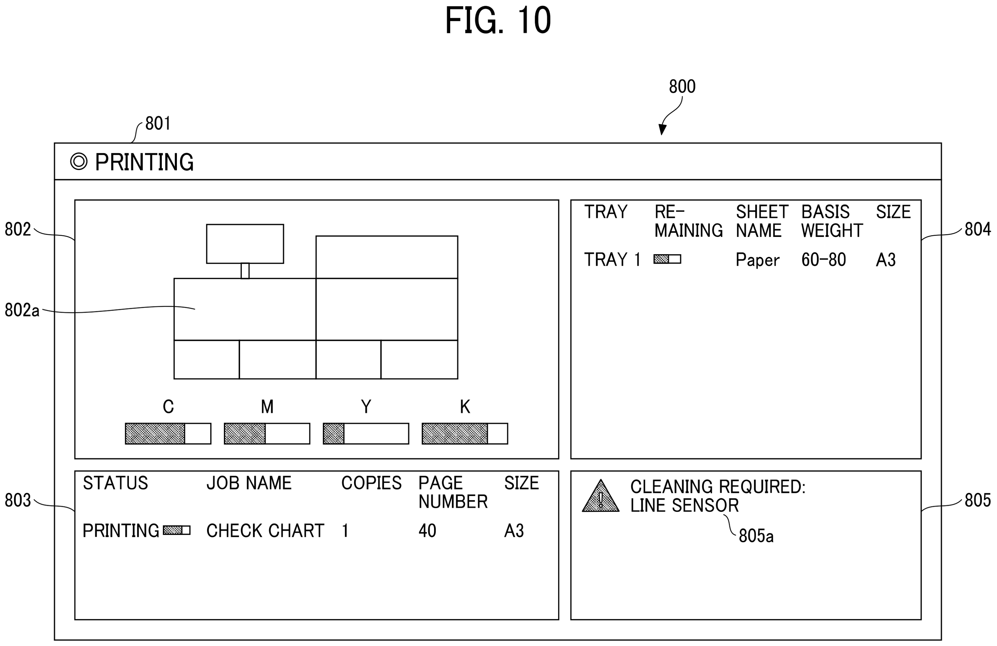

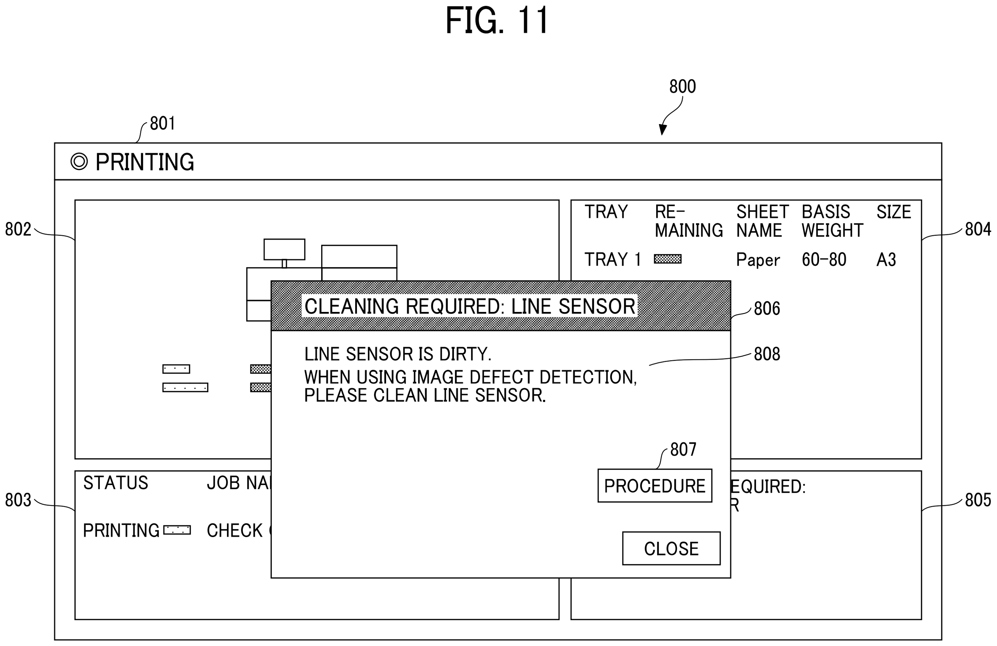

Examples of notification of defect detection to the user is described below with reference to FIGs. 10 and 11. FIG. 10 is a diagram illustrating an example of a status display screen 800 displayed by the inspection apparatus 103. The status display screen 800 in FIG. 10 is displayed in the process of step S605 in FIG. 7.

In a status field 801 on the status display screen 800, the status of the printing system 100 (e.g., under adjustment, printing) is indicated. In a field 802, the machine configuration of the printing system 100 is displayed together with an appearance model 802a. The machine configuration refers to a connection state of peripheral devices such as a finisher. When an event occurs, such as a sheet jam, the location where the event has occurred is highlighted in the appearance model. For example, the location where the sheet jam has occurred turns red, and when the user taps the location in the appearance model, the procedure for clearing the sheet jam is displayed. In the field 802, the remaining amount of toner of each color is displayed. When the toner reaches the near end state, for example, an icon for prompting the replacement of a toner cartridge is displayed. When the user taps the icon, a message prompting the user to check the stock of the toner cartridge may be displayed, or a procedure for replacing the toner cartridge may be displayed.

In a field 803, the status of a job currently being executed is indicated. The status of a job includes, for example, a status, the number of copies, the number of pages, and the sheet size. In a field 804, the sheet settings set for individual trays are indicated. The sheet settings include, for individual trays, information on the sheet stored in the tray, such as the number of remaining sheets, the name of the sheet, the basis weight, and the size.

A field 805 is used for displaying a notification to the user. In the field 805, a notification indicating an error or the need for maintenance, including detection of a defect in the detection process without sheet passage, is displayed. In FIG. 10, a case where it is determined that "the defect state has exceeded the threshold value" is illustrated. In the field 805, an error message 805a indicating "CLEANING REQUIRED: LINE SENSOR" is displayed to prompt the user to clean the dirt adhering to the sensor. Further, a message such as "a suspected defect caused by reading failure" may be displayed to notify the user of the possibility of the occurrence of erroneous detection of a defect caused by the reading device 131 or 132.

FIG. 11 is a diagram illustrating another example of the status display screen 800 on which another type of error message is displayed. In FIG. 11, a case where a defect notification is displayed in a pop-up manner is illustrated. In FIG. 11, a message box 806 is displayed in a pop-up manner on the status display screen 800 when "the defect state has exceeded the threshold value." In the message box 806, a title indicating "CLEANING REQUIRED: LINE SENSOR" and a message 808 indicating "LINE SENSOR IS DIRTY. WHEN USING IMAGE DEFECT DETECTION, PLEASE CLEAN LINE SENSOR" are displayed. The user can know that the line sensor should be cleaned.

Further, the message box 806 includes a procedure button 807, which allows the user to cause a specific procedure for cleaning to be displayed. For example, when the procedure button 807 is pressed, a moving image presenting the procedure for cleaning the line sensor is displayed.

When the error message is pressed in the field 805 of FIG. 10, the message box of FIG. 11 may be displayed in a pop-up manner.

Further, the inspection apparatus 103 may transmit the error message to the smartphone or wearable device (of a watch type, an eyeglass type, or a neck-worn type) of the user by, for example, e-mail or wireless communication.

### Threshold Value for Determining Whether to Notify User of Defect State

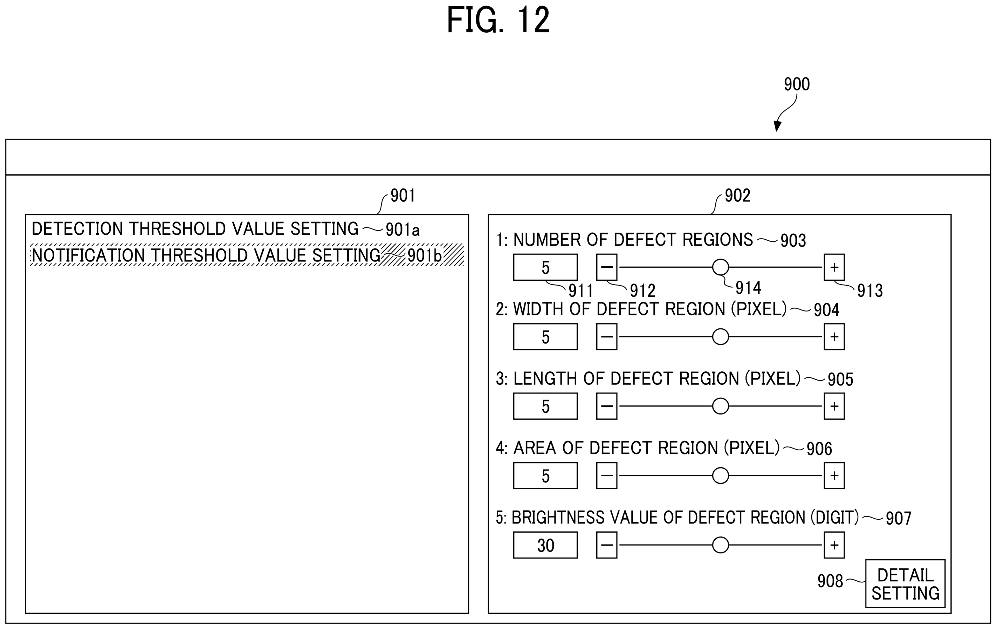

With reference to FIG. 12, a method of setting a threshold value for notifying the user of a defect state is described below. FIG. 12 is a diagram illustrating a threshold value setting screen 900 displayed by the inspection apparatus 103. The threshold value setting screen 900 includes a threshold type selection field 901 and a threshold value setting field 902. In the threshold type selection field 901, the user can select a threshold value setting 901a for setting a threshold value to detect dirt in the reading devices 131 and 132, or a threshold value setting 901b for setting a threshold value to determine whether to notify the user of the requirement of cleaning. In FIG. 12, it is assumed that the threshold value setting 901b is selected. In response to the selection, the items in the threshold value setting field 902 are switched, and the values currently set in the threshold value setting 901b are displayed.

In the threshold value setting field 902, a set value field 911, a minus button 912, a plus button 913, and a slider 914 are displayed for each of the items of a number of defect regions 903, a defect region width 904, a defect region length 905, a defect region area 906, and a defect brightness value 907. The user is allowed to adjust the set value by operating the mouse or the touch panel to move the slider 914 or to press the minus button 912 or the plus button 913. Also, the user is allowed to directly input a numerical value in the set value field 911.

The threshold value setting field 902 includes a detail setting button 908. The detail setting button 908 is a button for displaying a detail setting screen 920 used for setting a defect to be detected in the defect determination process within the inspection exclusion region. The detail setting screen 920 receives the setting of a type of defect to be detected in the inspection exclusion region even within the inspection exclusion region.

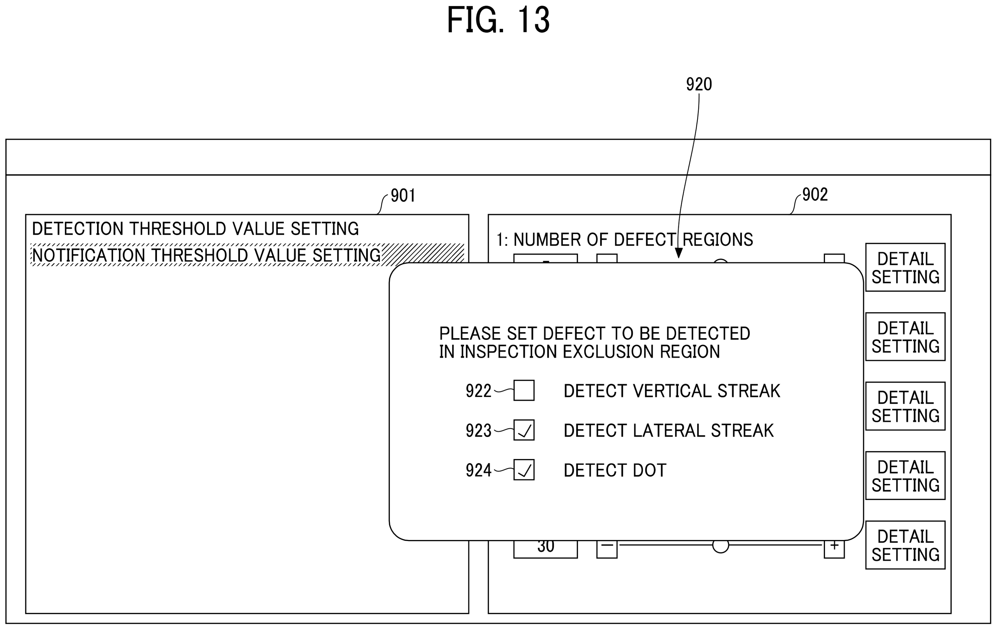

FIG. 13 is a diagram illustrating the detail setting screen 920 displayed in a pop-up manner. The detail setting screen 920 includes check boxes 922 to 924 corresponding to "detect a vertical streak," "detect a lateral streak," and "detect a dot," respectively. The "dot" is a defect in the form of a small dot. The user is allowed to set the types of defects to be detected within the inspection exclusion region. For example, when the user excludes (does not check) the "vertical streak" from the detection targets but does not exclude (checks) the "lateral streak" and the "dot," the first defect determination processing unit 355 can ignore, as a streak (reading streak) caused in the reading process, a defect such as the vertical streak that is likely to be caused by the dirt in the reading device 131 or 132. On the other hand, defects such as the "lateral streak" and the "dot," which are defects different from the reading streak that is a detect likely to be caused by the dirt in the reading device 131 or 132, can be detected without being missed even when the defects are present within the inspection exclusion region.

### Inspection Exclusion Region Setting Screen

FIG. 14 is a diagram illustrating an example of an inspection exclusion region setting screen 930 displayed by the inspection apparatus 103. The inspection exclusion region setting screen 930 is displayed in the process of step S606 in FIG. 7.

On the inspection exclusion region setting screen 930, a defect detection result 931 is displayed. The defect detection result 931 is a part of or the entirety of the inspection target image generated without sheet passage. Each position where a defect is detected is surrounded by a red frame 936. The inspection exclusion region is also set within each red frame 936 (for example, each region surrounded by the red frame 936 is set as an inspection exclusion region). In FIG. 14, three lines 937 each having a streak shape are defects indicating the positions of the defects. Since the defects are present on the inspection target image generated without sheet passage, dirt is assumed to be present in the reading device 131 or 132, or both.

On the inspection exclusion region setting screen 930, a prompting cleaning message 932 is also displayed. The prompting cleaning message 932 indicates, for example, "PLEASE CLEAN READING DEVICE." In the case where the result of the determination in step S603 of FIG. 7 is "No," such a message is displayed.

In the case where the preset manual adjusting function of the inspection exclusion region is enabled, an inspection exclusion region setting field 933 is displayed. The inspection exclusion region setting field 933 is a setting field for the user to set an inspection exclusion region where even a defect detected in the detection process during actual printing is not treated as a defect. In the inspection exclusion region setting field 933, a button 934 for adjusting the width of the inspection exclusion region and an inspection exclusion region setting completion button 935 are displayed. When the user presses the button 934 to adjust the width of the inspection exclusion region, each region surrounded by the red frame 936 is also changed in conjunction with the adjustment. In other words, the red frame 936 surrounding the defect of a streak shape becomes narrower or thicker in conjunction with the operation of the button 934. When the user presses the inspection exclusion region setting completion button 935, the inspection exclusion region setting screen 930 is closed. The exclusion region setting unit 356 registers, as the inspection exclusion region, each of the regions surrounded by the red frame 936 when the inspection exclusion region setting screen 930 is closed.

It is preferable that the position and width of the inspection exclusion region can be set by the user in accordance with the sheet setting. For example, the user is allowed to designate the inspection exclusion region for each sheet size such as A4 or A3, and each sheet type such as plain paper or coated paper. Since the region where an image is formed varies depending on the size or type of sheet, the user is allowed to set the inspection exclusion region for a region where an image is not formed according to the sheet setting.

In addition, the user may be allowed to set any region as the inspection exclusion region, regardless of the position of the detected defect. For example, the user drags the pointer of the mouse in the defect detection result 931 to draw a rectangular frame. This rectangular frame is set as the inspection exclusion region.

The inspection exclusion region setting screen 930 also includes an inspection exclusion region setting reception field 941. In the inspection exclusion region setting reception field 941, a message indicating "DO YOU WANT TO SET THIS AS INSPECTION EXCLUSION REGION IN DETECTION PROCESS DURING ACTUAL PRINTING?," a YES button 942, and a NO button 943 are displayed. In step S703 or S706 of FIG. 9, when the YES button 942 is pressed, the result of the determination is determined to be Yes and the inspection exclusion region is set.

### Inspection Exclusion Region Display Screen

FIG. 15 is a diagram illustrating an inspection exclusion region display screen 1000 displayed by the inspection apparatus 103. The inspection exclusion region display screen 1000 is displayed in the process of step S607 in FIG. 7. In other words, the inspection exclusion region and the position of the defect set in step S606 are displayed.

The inspection exclusion region display screen 1000 includes a menu field 1001 and an information display field 1002. In the menu field 1001, options for the user to select information to be displayed in the information display field 1002 are displayed. In FIG. 15, since inspection exclusion region information 1006 is selected, the inspection exclusion region information 1006 is highlighted. In the information display field 1002, inspection exclusion region information 1003 is displayed.

The lateral direction of the inspection exclusion region information 1003 represents the main scanning direction, and the vertical direction of the inspection exclusion region information 1003 represents the sub-scanning direction. The width of the inspection exclusion region information 1003 is the entire length of the line sensor that is each of the reading devices 131 and 132, that is, the reading width. Although a part of the inspection target image in the sub-scanning direction is omitted in FIG. 15, the entirety of the inspection target image generated through the detection process without sheet passage may be displayed. Alternatively, the display control unit 358 may cause defects to be scanned in the sub-scanning direction. When defects are detected at different positions in the main scanning direction, the display control unit 358 may cause the entirety of the inspection target image or a part of the inspection target image where the defects are present in the sub-scanning direction to be displayed.

The size of the inspection exclusion region information 1003 may be enlarged or reduced. Each of inspection exclusion regions 1004 may be color-coded, for example, according to the size or degree of the defect.

The inspection exclusion region information 1003 is displayed based on the defect determination information generated in step S601 of FIG. 7, which is generated through the detection process without sheet passage. In the example of FIG. 15, the inspection exclusion regions 1004 are detected at three positions in the main scanning direction. Each inspection exclusion region 1004 has a width, which is indicated by two lines.

The inspection exclusion region display screen 1000 in FIG. 15 may be displayed before the start of the print job. In this case, the inspection exclusion region display screen 1000 may transition to the inspection exclusion region setting screen 930 in FIG. 14.

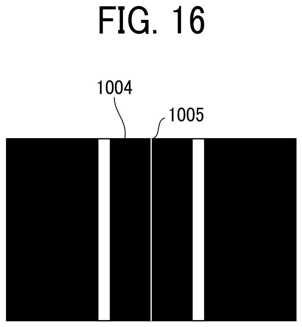

FIG. 16 is a diagram illustrating one of the inspection exclusion regions 1004, which is enlarged. In the center of the inspection exclusion region 1004 in the vertical direction, a reading streak 1005 is present. The reading streak 1005 indicates the position of a defect in the main scanning direction. The inspection exclusion region 1004 is a region surrounded by two straight lines equally distant from the reading streak 1005 on the right and left sides. This distance is preset, but may be adjustable by the user. The display control unit 358 causes at least one of the reading streak 1005 (the position of the defect) and the inspection exclusion region 1004 to be displayed.

The user can check the position of the inspection exclusion region 1004 and determine whether the inspection exclusion region 1004 overlaps the image of the print data. Accordingly, the user can more reliably determine whether cleaning work is required. Thus, the downtime due to the cleaning work is reduced.

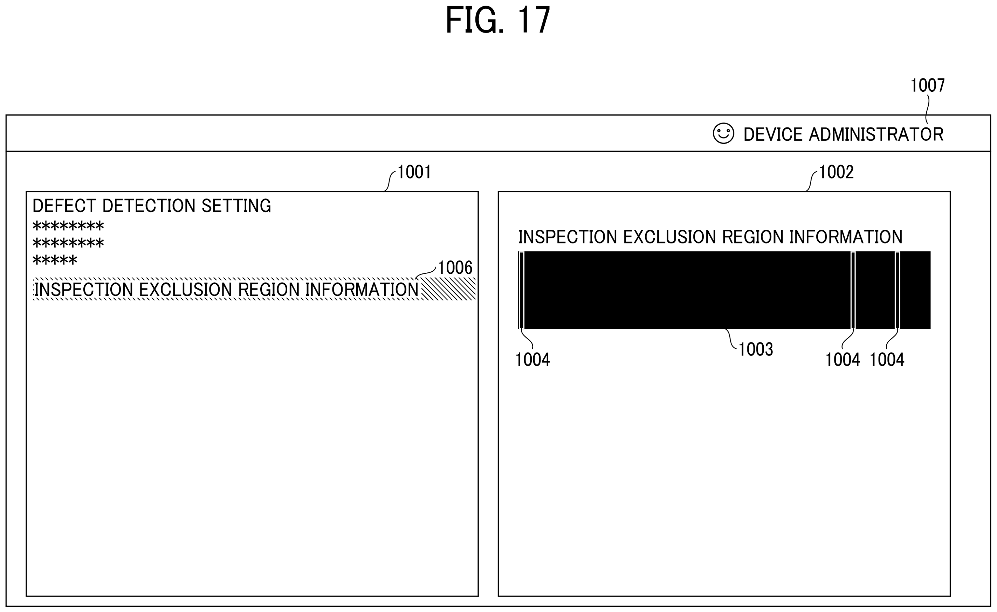

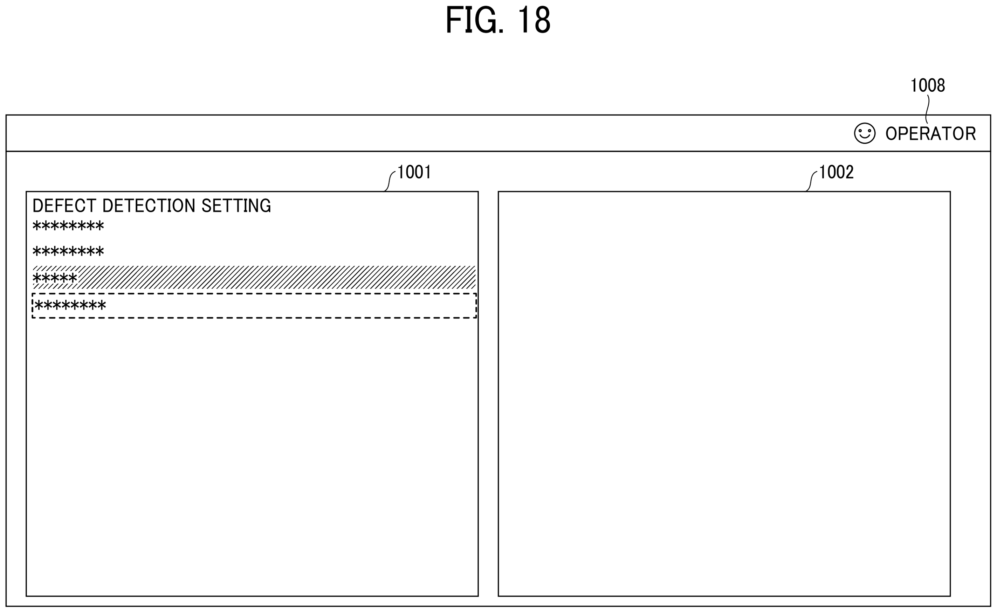

As illustrated in FIGs. 17 and 18, the printing system 100 may grant the authority to display the inspection exclusion region information 1003 only to an administrator. FIG. 17 is a diagram illustrating an example of the inspection exclusion region display screen 1000 displayed according to the authority of the user who has logged in. Although the configuration of the inspection exclusion region display screen 1000 in FIG. 17 is substantially the same as that of the inspection exclusion region display screen 1000 in FIG. 15, the authority of the user who has logged in is displayed at an upper-right portion of the inspection exclusion region display screen 1000 in FIG. 17. In other words, since a device administrator has logged in the printing system 100 in FIG. 17, a device administrator 1007 is displayed as the authority of the user who has logged in. Since the device administrator 1007 has the authority to display the inspection exclusion region information 1003, the inspection exclusion region display screen 1000, which has the same configuration as that of the inspection exclusion region display screen 1000 in FIG. 15, is displayed.

FIG. 18 is a diagram illustrating another example of the inspection exclusion region display screen 1000 displayed according to the authority of the user who has logged in. In FIG. 18, an operator 1008 who is not a device administrator has logged in the printing system 100. In FIG. 18, the operator 1008 is displayed as the authority of the user who has logged in. Accordingly, the inspection exclusion region information 1006 is not displayed in the menu field 1001 of the inspection exclusion region display screen 1000 in FIG. 18. The inspection exclusion region information 1006 may be displayed, but, for example, the inspection exclusion region information 1006 is not selectable. Since the inspection exclusion region information 1006 is not presented, the operator 1008 cannot perform an operation to display the inspection exclusion region information 1003.

In this way, by switching whether the inspection exclusion region information 1003 is displayable according to the authority held by the user, unnecessary information can be prevented from being displayed to the operator. This is because the user can check the inspection exclusion region information 1003 even when the message prompting cleaning described with reference to, for example, FIG. 10 has not been given. If a user who is not familiar with the functions of the printing system 100 or a user whose job is to perform cleaning work in response to a message prompting cleaning views the inspection exclusion region information 1003, the user may misunderstand that there is an abnormality in the printing system 100 or may perform unnecessary cleaning work. By restricting the authority to display the inspection exclusion region information 1003, such inconvenience can be avoided.

The person authorized to display the inspection exclusion region information 1003 may be changed by, for example, the device administrator through settings. Alternatively, the authority to display the inspection exclusion region information 1003 may be given to operators individually.

### Display Example of Inspection Exclusion Region Information

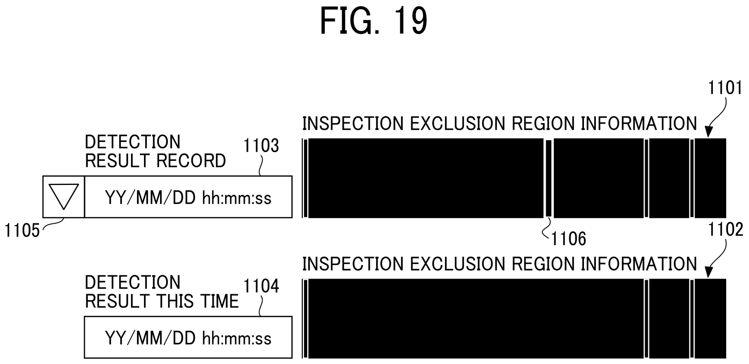

FIG. 19 is a diagram illustrating another display example of the inspection exclusion region information. In FIG. 19, inspection exclusion region information 1101 generated in the past and inspection exclusion region information 1102 last generated are simultaneously displayed in the information display field 1002. In this way, the user who has performed the cleaning work can check whether the dirt has been removed from the desired position. In the example of FIG. 19, it can be seen that an exclusion region 1106 (a reading streak) at one position has been removed by cleaning.

The inspection exclusion region information 1101 generated in the past and the inspection exclusion region information 1102 last generated are displayed in association with date and time information 1103 and 1104 indicating when the inspection exclusion region information 1101 and 1102 are set, respectively. With the date and time information 1103 and 1104, the user can know when the inspection exclusion region information 1101, which is compared with the inspection exclusion region information 1102 last generated, is set.

In order to implement such display, the exclusion region setting unit 356 causes the storage unit 351 to store the date and time information and the inspection exclusion region information of the inspection performed in the past. As described above, the storage unit 351 stores the records of the inspection exclusion region information generated in the past.

A pull-down button 1105 is displayed in association with the date and time information 1103. When the user presses the pull-down button 1105, a list of dates and times of the inspection exclusion region information stored in the storage unit 351 is displayed. The user can select a date and time to check any inspection exclusion region information generated in the past. If the date and time when the user inspected the inspection target image in the detection process during actual printing is known, the inspection exclusion region information set at this date and time can be checked.

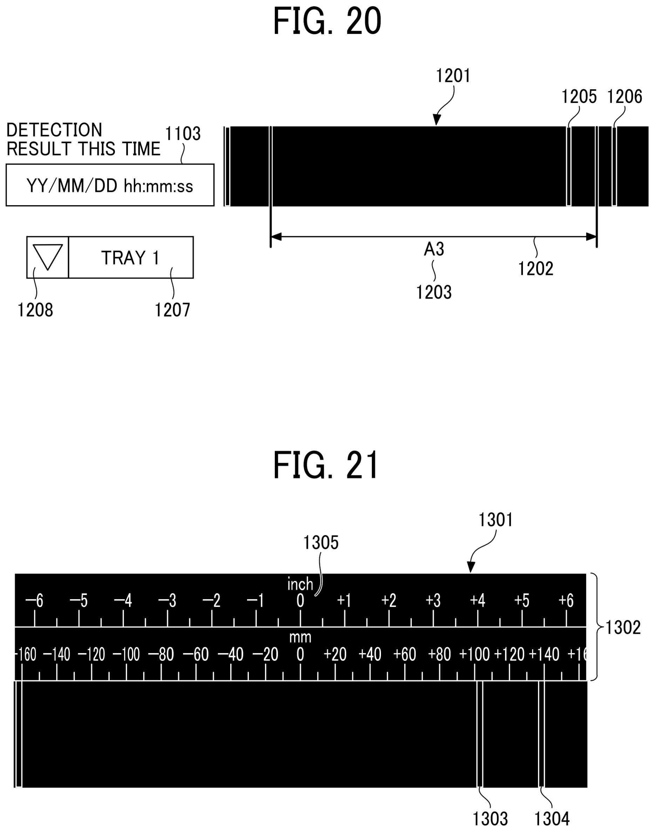

FIG. 20 is a diagram illustrating still another display example of the inspection exclusion region information displayed with a sheet position. The differences from FIG. 19 are described below with reference to FIG. 20. The width of inspection exclusion region information 1201 is the entire length of the line sensor that is each of the reading devices 131 and 132. In FIG. 20, a range where the printed matter overlaps with the line sensor when the line sensor actually reads the printed matter is indicated as a sheet position 1202. In other words, the sheet position 1202 indicates a range where the printed matter overlaps the inspection exclusion region information 1201 in width.

In addition, a sheet size 1203 is also displayed together with the sheet position 1202. In this way, the user can determine whether the sheet size 1203 of the printed matter and the sheet position 1202 of this sheet size overlap an inspection exclusion region 1205 or 1206. Thus, the user can quickly and reliably determine whether the inspection exclusion region 1205 or 1206 is influential. Accordingly, the user can more reliably determine whether cleaning work is required. Thus, the downtime due to the cleaning work is reduced.

In FIG. 20, a tray name 1207 and a pull-down button 1208 are also displayed. When the user presses the pull-down button 1208, a list of tray names included in the printer 101 and the sheet sizes of sheets contained in individual trays are displayed. When the user selects a tray name from the list of tray names, the sheet position 1202 and the sheet size 1203 are switched to suit the size of the selected sheet.

The tray name and the size of sheet contained in each tray may be acquired by the external I/F control unit 304 from the printer 101 or may be stored in the storage unit 305.

FIG. 21 is a diagram illustrating still another display example of the inspection exclusion region information displayed with a scale 1302 indicating a dimension. In FIG. 21, the display control unit 358 sets the center of inspection exclusion region information 1301 in the width direction as a reference point 1305 (zero point) and causes the distance from the reference point 1305 to be displayed with the scale 1302. The left side from the center is a negative dimension and the right side is a positive dimension, but the positive and negative signs may be reversed. The scale 1302 corresponds to the dimension of the line sensor and also to the sheet size. The scale 1302 may only employ either inches or millimeters.

Since the positions of inspection exclusion regions 1303 and 1304 are expressed in numerical values (see the scale 1302), the positions of the defects can be grasped more quantitatively. For example, since the A4 size is 210 millimeters (mm) × 297 mm, it can be quantitatively determined whether the inspection exclusion regions 1303 and 1304 are present within 210/2 mm or 297/2 mm from the reference point 1305. As a result, the user can quickly and reliably determine whether the inspection exclusion region 1303 or 1304 is influential. Accordingly, the user can more reliably determine whether cleaning work is required. Thus, the downtime due to the cleaning work is reduced.

In FIG. 21, the reference point 1305 of the scale 1302 is set at the center of the line sensor in the width direction. Alternatively, the left end or the right end of the line sensor may be set as the reference point.

### Simultaneous Display of Inspection Target Image and Inspection Exclusion Region Information

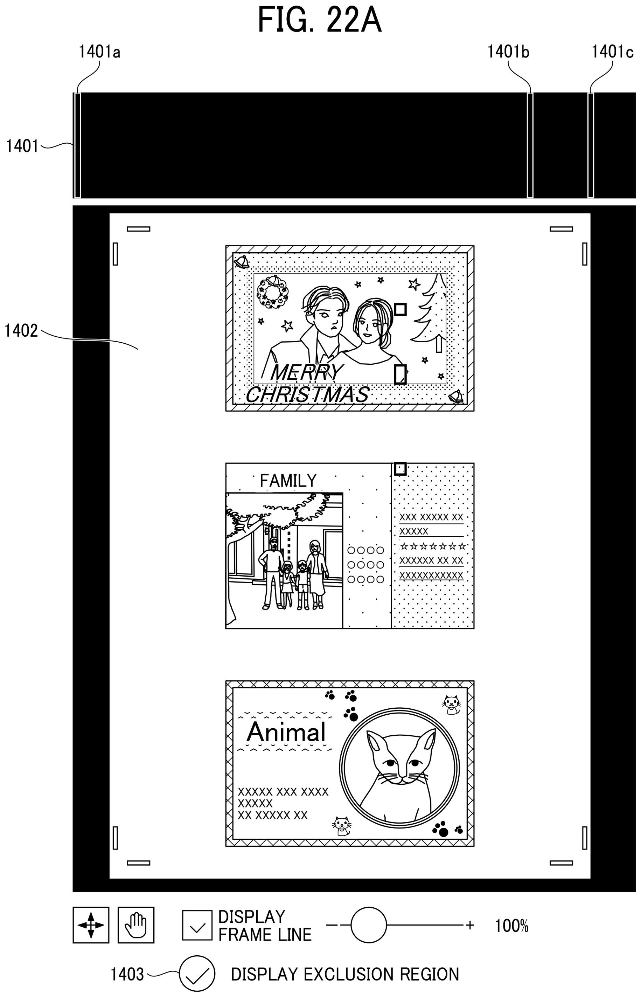

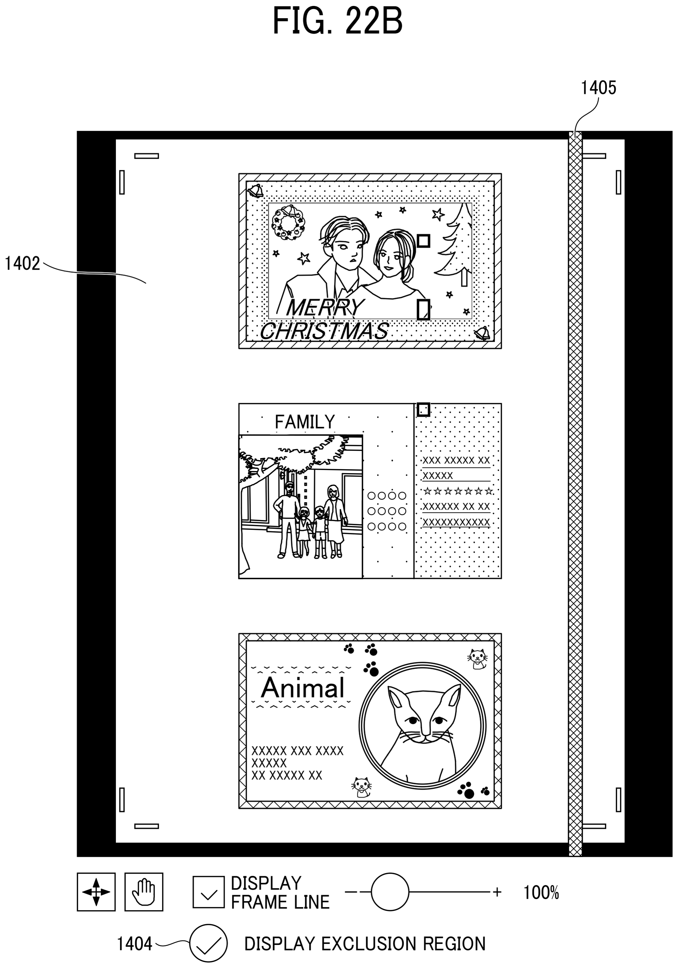

FIGs. 22A and 22B are diagrams each illustrating a display example in which an inspection target image 1402 generated through the detection process during actual printing and inspection exclusion region information 1401 are displayed on one screen. The user sometimes desires to check an inspection target image in the past and the inspection exclusion region set at the time of the inspection of the inspection target image. In such a case, in response to receiving a designation of an inspection target image generated in the past from the user, the display control unit 358 acquires, from the storage unit 351, the inspection target image generated in the past and the date and time when the inspection is performed on the inspection target image. The date and time when the inspection is performed may be a time stamp of a file storing the inspection target image. Alternatively, the inspection target image may be stored in association with the date and time, for example, when the print job is executed.

The display control unit 358 acquires from the storage unit 351 the inspection exclusion region information set at the date and time when the inspection is performed on the inspection target image. For example, it is assumed that the date and time when the inspection is performed on the inspection target image is March 5th, and the inspection exclusion region information dated March 4th and the inspection exclusion region information dated March 6th are stored in the storage unit 351. In this case, the inspection exclusion region information dated March 4th is the inspection exclusion region information set at the time of the inspection of the inspection target image. The display control unit 358 causes the inspection target image generated in the past and the inspection exclusion region information to be displayed on one screen.

In FIG. 22A, the display control unit 358 causes the main scanning directions of the inspection exclusion region information 1401 and the inspection target image 1402 to align. In addition, the display control unit 358 causes the inspection exclusion region information 1401 and the inspection target image 1402 to be displayed adjacent to each other. The user can determine whether image areas are present in ranges obtained by extending inspection exclusion regions 1401a to 1401c in the sub-scanning direction, respectively.

An exclusion region display button 1403 is a button for switching between a display mode and a non-display mode of the inspection exclusion region information 1401.

In FIG. 22B, an inspection exclusion region 1405 is displayed on the inspection target image 1402 in an overlapping manner. The inspection exclusion region 1405 is a range obtained by extending the inspection exclusion region 1401b in the sub-scanning direction. Instead of or together with the inspection exclusion region 1405, the position of the defect may be displayed.

In this way, by displaying the inspection exclusion region 1405 on the inspection target image 1402 in an overlapping manner, the user can determine whether the inspection exclusion region 1405 overlaps the image areas. As a result, the user can quickly and reliably determine whether the inspection exclusion region 1303 or 1304 is influential. Accordingly, the user can more reliably determine whether cleaning work is required. Thus, the downtime due to the cleaning work is reduced.

An exclusion region display button 1404 is a button for switching between a display mode and a non-display mode of the inspection exclusion region 1405. When the non-display mode is set, the inspection exclusion region 1405 is not displayed. Thus, the user can easily check the quality of the inspection target image 1402. For example, the user can check whether the print quality in the inspection exclusion region 1405 has actually deteriorated.

### Setting of Inspection Exclusion Region by User

The inspection apparatus 103 has a function of receiving, as desired, a setting of an inspection exclusion region for each print job and each sheet size. The user can set, as an inspection exclusion region, a region where no image is present or a variable region where no image is present and whose position varies depending on the print job.

The exclusion region setting unit 356 causes the storage unit 351 to store information indicating that the inspection exclusion region is set through the detection process without sheet passage in association with the inspection exclusion region information, and to store information indicating that the inspection exclusion region is set by the user as desired in association with the inspection exclusion region.

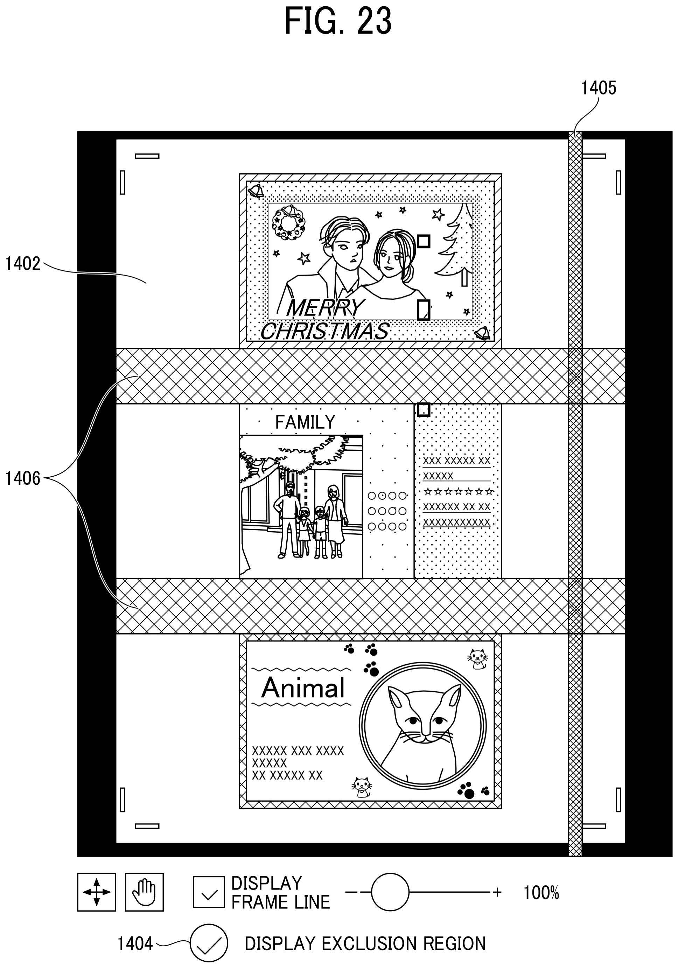

FIG. 23 is a diagram illustrating a display example of inspection exclusion regions 1406 that are set by the user as desired. As illustrated in FIG. 23, when the inspection exclusion region 1405 is checked, the display control unit 358 causes the inspection exclusion regions 1406 set by the user as desired and the inspection exclusion region 1405 set through the detection process without sheet passage to be displayed in different colors. In FIG. 23, each region where no image is present in the sub-scanning direction is set as an inspection exclusion region 1406. In this way, the user can easily distinguish the inspection exclusion region 1405 set due to a defect from the inspection exclusion regions 1406 set by the user as desired.

In one aspect of the present disclosure, since the user can check the inspection exclusion region set through the detection process without sheet passage on the screen, the user can quickly and reliably determine whether the inspection exclusion region is influential. Accordingly, the user can more reliably determine whether cleaning work is required. Thus, the downtime due to the cleaning work is reduced.

### Applied Cases

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure. Any one of the above-described operations may be performed in various other ways, for example, in an order different from the one described above.

The configuration according to the present embodiment illustrated in FIG. 5 is divided according to functions in order to facilitate understanding of the processing units executed by the inspection apparatus 103. No limitation to the scope of the present disclosure is intended by how the processing units are divided or by the names of the processing units. The processing units executed by the inspection apparatus 103 may be divided into a greater number of processing units in accordance with the contents of the processing units. In addition, a single processing unit can be divided to include a greater number of processing units.

The printer 101 is not limited to a printing device employing an electrophotographic method, but may be any printing device employing, for example, an inkjet printing system, a thermal transfer system, a letterpress method, a lithographic method, an intaglio method, or a stencil method.

The inspection apparatus 103 and the printer 101 may be separate apparatuses. In this case, the user operates the inspection apparatus 103 to read the printed matter, and operates the printer owned by the user to store the inspection exclusion region determined by the inspection apparatus 103.

The printing system 100 is not limited to the one used for commercial printing, and may be used in, for example, an office, a factory, an ordinary home, or a convenience store.

The processing of the inspection apparatus 103 described in one aspect of the present disclosure may be executed by a server apparatus connected via a network. In this case, the inspection apparatus 103 transmits the inspection target image to the server apparatus, and the server apparatus transmits the inspection result to the inspection apparatus 103. The inspection apparatus 103 receives the setting of the inspection exclusion region and registers the setting in the inspection apparatus 103 or the server apparatus.

Alternatively, the defect may be detected by a model generated through the learning effect of machine learning. In the present disclosure, the machine learning is a technique that enables a computer to acquire human-like learning ability. The machine learning refers to a technology in which a computer autonomously generates an algorithm to be used for determination such as data identification from training data loaded in advance and applies the generated algorithm to new data to make a prediction. Any suitable learning method may be applied to the machine learning. For example, any one of supervised learning, unsupervised learning, semi-supervised learning, reinforcement learning, and deep learning may be applied to the machine learning.

Each of the functions of the embodiments described above may be implemented by one or more processing circuits or circuitry. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality. There is a memory that stores a computer program which includes computer instructions. These computer instructions provide the logic and routines that enable the hardware (e.g., processing circuitry or circuitry) to perform the method disclosed herein. This computer program can be implemented in known formats as a computer-readable storage medium, a computer program product, a memory device, a record medium such as a compact disc-read-only memory (CD-ROM) or digital versatile disc (DVD), and/or the memory of a field-programmable gate array (FPGA) or application-specific integrated circuit (ASIC).

Aspects of the present disclosure are, for example, as follows.

According to Aspect 1, an image forming apparatus includes a printed image reading unit that reads with a reading device printed matter printed by a printing apparatus based on print data to generate a first inspection target image, a first defect determination processing unit that detects a defect on the printed matter based on the first inspection target image and a master image generated from the print data of the printed matter, a second defect determination processing unit that detects a position of the defect on a second inspection target image generated by the reading device without sheet passage, an exclusion region setting unit that sets, based on the position of the defect detected by the second defect determination processing unit, an inspection exclusion region where the first defect determination processing unit does not detect the defect, and a display control unit that causes a display to display at least one of the position of the defect on the second inspection target image and the inspection exclusion region.

According to Aspect 2, the image forming apparatus of Aspect 1 further includes a storage unit that stores at least one of the inspection exclusion region set by the exclusion region setting unit in the past and the position of the defect, and the date and time when the inspection exclusion region is set. The display control unit causes the display to display the at least one of the inspection exclusion region set in the past and the position of the defect stored in the storage unit and the date and time to simultaneously with one of the inspection exclusion region currently set and the position of the defect.

According to Aspect 3, in the image forming apparatus of Aspect 1 or 2, the display control unit causes the display to display the at least one of the inspection exclusion region and the position of the defect in association with a position in a main scanning direction and causes the display to display a sheet position of a sheet on which the first inspection target image is formed, together with the at least one of the inspection exclusion region and the position of the defect.

According to Aspect 4, in the image forming apparatus of any one of Aspects 1 to 3, the display control unit causes the display to display the at least one of the inspection exclusion region and the position of the defect in association with the position of the main scanning direction and causes the display to display a scale of a dimension in the main scanning direction in association with the position of the main scanning direction, together with the at least one of the inspection exclusion region and the position of the defect.

According to Aspect 5, in the image forming apparatus of any one of Aspects 1 to 4, the display control unit switches between a display mode and a non-display mode of the at least one of the inspection exclusion region and the position of the defect according to the authority of a user specified based on the login.

According to Aspect 6, in the image forming apparatus of Aspect 2, the storage unit stores the date and time when the first inspection target image is inspected and the first inspection target image, and the display control unit, when displaying the first inspection target image designated by a user, causes the display to display the at least one of the inspection exclusion region set in the past and the position of the defect, which are set at the date and time when the first inspection target image is set.

According to Aspect 7, in the image forming apparatus of Aspect 6, the display control unit causes the display to display one of the inspection exclusion region set in the past and the position of the defect, which are set at the date and time when the first inspection target image is set, on the first inspection target image in an overlapping manner.

According to Aspect 8, in the image forming apparatus of Aspect 7, the exclusion region setting unit receives a setting of the inspection exclusion region designated by the user as desired, and the display control unit, when displaying the inspection exclusion region set in the past on the first inspection target image in the overlapping manner, causes the display to display the inspection exclusion region designated by the user as desired and the inspection exclusion region set in the past in different colors.

According to Aspect 9, in the image forming apparatus of any one of Aspects 1 to 8, the second defect determination processing unit detects the position of the defect on the second inspection target image generated by the reading device without sheet passage, and a process of setting the inspection exclusion region performed by the exclusion region setting unit based on the position of the defect detected by the second defect determination processing unit is performed when the image forming apparatus is turned on, when the image forming apparatus returns from an energy saving mode, when a print job is completed, or when a predetermined cover of the image forming apparatus is closed.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The present disclosure described herein further provides an image forming system including a printer to print printed matter based on print data, a printed image reading unit to read, with a reading device, the printed matter to generate a first inspection target image, a first defect determination processing unit to detect a defect on the printed matter based on a master image and the first inspection target image, the master image being generated from the print data of the printed matter, a second defect determination processing unit to detect a position of the defect on a second inspection target image generated by the reading device without sheet passage, an exclusion region setting unit to set, based on the position of the defect detected by the second defect determination processing unit, an inspection exclusion region where the first defect determination processing unit does not detect the defect, and a display control unit to cause a display to display at least one of the position of the defect on the second inspection target image and the inspection exclusion region.

## Claims

1. An image forming apparatus (100) comprising:
a printer (101) configured to print printed matter based on print data;
a printed image reading unit (307) configured to read, with a reading device, the printed matter to generate a first inspection target image;
a first defect determination processing unit (355) configured to detect a defect on the printed matter based on a master image and the first inspection target image, the master image being generated from the print data of the printed matter;
a second defect determination processing unit (357) configured to detect a position of the defect on a second inspection target image generated by the reading device without sheet passage;
an exclusion region setting unit (356) configured to set, based on the position of the defect detected by the second defect determination processing unit (357), an inspection exclusion region where the first defect determination processing unit (355) does not detect the defect; and
a display control unit (358) configured to cause a display to display at least one of the position of the defect on the second inspection target image and the inspection exclusion region.

2. The image forming apparatus (100) according to claim 1, further comprising
a storage unit (351) configured to store at least one of the inspection exclusion region set by the exclusion region setting unit (356) in a past and the position of the defect, and a date and time the inspection exclusion region is set,
wherein the display control unit (358) is configured to cause the display to display the at least one of the inspection exclusion region set in the past and the position of the defect, and the date and time, stored in the storage unit (351), simultaneously with one of the inspection exclusion region currently set and the position of the defect.

3. The image forming apparatus (100) according to claim 1 or 2,
wherein the display control unit (358) is configured to:
cause the display to display the at least one of the inspection exclusion region and the position of the defect in association with a position in a main scanning direction; and
cause the display to display a sheet position of a sheet on which the first inspection target image is formed, together with the at least one of the inspection exclusion region and the position of the defect.

4. The image forming apparatus (100) according to any one of claims 1 to 3,
wherein the display control unit (358) is configured to cause the display to display a scale of a dimension in the main scanning direction in association with the position of the main scanning direction, together with the at least one of the inspection exclusion region and the position of the defect.

5. The image forming apparatus (100) according to any one of claims 1 to 4,
wherein the display control unit (358) is further configured to switch between a display mode and a non-display mode of the at least one of the inspection exclusion region and the position of the defect according to authority of a login user.

6. The image forming apparatus (100) according to claim 2, wherein:
the storage unit (351) is configured to store a date and time the first inspection target image is inspected and the first inspection target image; and
the display control unit (358) is configured to, in displaying the first inspection target image designated by a user, cause the display to display the at least one of the inspection exclusion region set in the past and the position of the defect, the inspection exclusion region and the position of the defect having been set at a date and time the first inspection target image is set.

7. The image forming apparatus (100) according to claim 6,
wherein the one of the inspection exclusion region set in the past and the position of the defect is superimposed on the first inspection target image.

8. The image forming apparatus (100) according to claim 7, wherein:
the exclusion region setting unit (356) is further configured to receive a setting of the inspection exclusion region designated by the user; and
the display control unit (358) is configured to, in displaying the inspection exclusion region set in the past while being superimposed on the first inspection target image, cause the display to display the inspection exclusion region designated by the user and the inspection exclusion region set in the past in different colors.

9. The image forming apparatus (100) according to any one of claims 1 to 8,
wherein the exclusion region setting unit (356) performs a process of setting the inspection exclusion region based on the position of the defect detected by the second defect determination processing unit (357) in one of a case that the image forming apparatus (100) is turned on, a case that the image forming apparatus (100) returns from an energy saving mode, a case that a print job is completed, and a case that a cover of the image forming apparatus (100) is closed.

10. An inspection method comprising:
reading (S601), with a reading device, printed matter printed by a printing apparatus based on print data to generate a first inspection target image;
detecting (S602) a defect on the printed matter based on a master image and the first inspection target image, the master image being generated from the print data of the printed matter;
detecting (S702) a position of the defect on a second inspection target image generated by the reading device without sheet passage;
setting (S606), based on the position of the defect, an inspection exclusion region where the defect is not detected; and
displaying (S607), on a display, at least one of the position of the defect on the second inspection target image and the inspection exclusion region.

11. A carrier medium carrying computer-readable code for controlling a computer system to carry out an inspection method, the method comprising:
reading (S601), with a reading device, printed matter printed by a printing apparatus based on print data to generate a first inspection target image;
detecting (S602) a defect on the printed matter based on a master image and the first inspection target image, the master image being generated from the print data of the printed matter;
detecting (S702) a position of the defect on a second inspection target image generated by the reading device without sheet passage;
setting (S606), based on the position of the defect, an inspection exclusion region where the defect is not detected; and
displaying (S607), on a display, at least one of the position of the defect on the second inspection target image and the inspection exclusion region.
